# EUROPEAN PATENT APPLICATION

(11) **EP 4 832 144 A1**
(43) Date of publication of application: **28.10.2026**
(21) Application number: 24907910.4
(22) Date of filing: 04.12.2024
(51) Int. Cl.: H01M 10/52, H01M 4/136, H01M 4/62, H01M 4/58, H01M 4/36, H01M 4/66, H01M 10/052, H01M 10/0562

(54) **LITHIUM SECONDARY BATTERY**

(30) Priority: 22.12.2023 KR 20230190354
(71) Applicant: SAMSUNG SDI CO., LTD., Yongin-si, Gyeonggi-do 17084 (KR)
(72) Inventor: SHIM, Kyu Eun, Yongin-Si Gyeonggi-do 17084 (KR); LIM, Hyung Sub, Yongin-Si Gyeonggi-do 17084 (KR); JO, Sung Nim, Yongin-Si Gyeonggi-do 17084 (KR); SON, In Hyuk, Yongin-Si Gyeonggi-do 17084 (KR); LEE, Ji Eun, Yongin-Si Gyeonggi-do 17084 (KR); PARK, Tae Hyun, Yongin-Si Gyeonggi-do 17084 (KR)
(74) Representative: Meissner Bolte Partnerschaft mbB
(86) International application number: PCT/KR2024/019776
(87) International publication number: WO 2025/135626

(57) **Abstract**

Provided is a lithium secondary battery including a cathode including lithium sulfide (Li₂S), an anode, an electrolyte layer disposed between the cathode and the anode, and a metal-organic framework.

## Description

### Technical Field

The present disclosure relates to a lithium secondary battery including a metal-organic framework.

### Background Art

Recently, in accordance with industrial demand, batteries having high energy density and high safety have been actively developed. For example, lithium secondary batteries are used in various applications including information devices, communication devices, vehicles, and the like. Since vehicles affect people's lives, safety is also important.

A short circuit in lithium secondary batteries employing a liquid electrolyte may increase the likelihood of fires and/or explosions. Solid secondary batteries using a solid electrolyte instead of a liquid electrolyte have been proposed. The likelihood of ignition of solid electrolytes is lower than that of liquid electrolytes.

Since solid secondary batteries employ a solid electrolyte instead of a liquid electrolyte, the likelihood of fires or explosions may be reduced. Solid batteries may provide improved safety.

### Disclosure of Invention

### Technical Problem

An aspect is to provide a lithium secondary battery with reduced hydrogen sulfide generation.

### SOLUTION TO PROBLEM

According to an embodiment, provided is a lithium secondary battery including: a cathode including lithium sulfide (Li₂S); an anode; an electrolyte layer disposed between the cathode and the anode; and a metal-organic framework.

### Advantageous Effects of Invention

According to an aspect, since the lithium secondary battery includes the metal-organic framework, hydrogen sulfide that may be generated when the lithium sulfide included in the cathode is exposed to air may be internally adsorbed, thereby reducing an amount of the hydrogen sulfide exposed to the outside as compared to when the lithium secondary battery is used alone.

### BRIEF DESCRIPTION OF DRAWINGS

FIG. 1 is a cross-sectional view of a lithium secondary battery according to an exemplary embodiment.
FIG. 2 is a cross-sectional view of a lithium secondary battery according to an exemplary embodiment.
FIG. 3 is a cross-sectional view of a lithium secondary battery according to an exemplary embodiment.
FIG. 4 is a cross-sectional view of a lithium secondary battery according to an exemplary embodiment.
FIG. 5 is a cross-sectional view of a lithium secondary battery according to an exemplary embodiment.

### Best Mode for Carrying out the Invention

### Mode for the Invention

Unless otherwise defined, all terms (including technical and scientific terms) used in the present disclosure have the same meaning as commonly understood by one of ordinary skill in the art to which the disclosure belongs. In addition, it will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Embodiments are described in the present disclosure with reference to cross-sectional views which are schematic views of idealized embodiments. As such, variations from the shapes of the illustrations as a result, for example, of manufacturing techniques and/or tolerances, are to be expected. Thus, the embodiments described in the present disclosure should not be construed as limited to the particular shapes of regions illustrated in the disclosure but may include deviations in shapes that result, for example, from manufacturing. For example, regions illustrated or described as being flat may be typically rough and/or have nonlinear features. Moreover, sharp-drawn angles may be round. Thus, regions illustrated in the drawings are schematic in nature and their shapes are not intended to illustrate the actual shape of a region and are not intended to limit the scope of the claims.

The present inventive concept may, however, be embodied in different forms and should not be construed as limited to the embodiments described in the present disclosure. These embodiments are provided so that the present disclosure will be thorough and complete, and will fully convey the scope of the present inventive concept to those skilled in the art. Like reference numerals designate like elements.

When it is described that an element is "on" another element, it will be understood that the element may be disposed directly on another element or still another element may be interposed therebetween. On the other hand, when it is described that an element is "directly on" another element, still another element is not interposed therebetween.

It will be understood that, although the terms "first," "second," and "third" may be used in the present disclosure to describe various elements, components, regions, layers, and/or sections, these elements, components, regions, layers, and/or sections should not be limited by these terms. These terms are only used to distinguish one element, component, region, layer, or section from another region, layer, or section. Thus, a first element, component, region, layer, or section described below may be termed a second element, component, region, layer, or section without departing from the teachings of the present disclosure.

The term used in the present disclosure is intended to describe only a specific embodiment and is not intended to limit the present inventive concept. As used herein, the singular forms "a," "an," and "the" are intended to include the plural forms, including "at least one," unless the content clearly indicates otherwise. "At least one" should not be construed as being limited to the singular. As used in the present disclosure, the term "and/or" includes any and all combinations of one or more of the associated listed items. The terms "includes," "including," "comprises," and/or "comprising," when used in the detailed description, specify a presence of stated features, regions, integers, steps, operations, elements, and/or components, but do not preclude the presence or addition of one or more other features, regions, integers, steps, operations, elements, components, and/or groups thereof.

Spatially relative terms such as "beneath," "below," "lower," "above," and "upper" may be used herein to easily describe one element or feature's relationship to another element or feature. It will be understood that the spatially relative terms are intended to encompass different orientations of a device in use or operation in addition to the orientation illustrated in the drawings. For example, when a device in the drawings is turned over, elements described as "below" or "beneath" other elements or features would then be "above" or "over" the other elements or features. Thus, the example term "below" may encompass both orientations of above and below. The device may be otherwise oriented (rotated 90 degrees or at other orientations), and the spatially relative terms used in the present disclosure may be interpreted accordingly.

"Group" refers to a group of the periodic table of elements according to the International Union of Pure and Applied Chemistry ("IUPAC") Groups 1-18 group classification system.

As used herein, the term "particle sizer" or "particle diameter" refers to an average diameter when particles are spherical and refers to an average major axis length when particles are non-spherical. A particle diameter may be measured using a particle size analyzer (PSA). A "particle size" or "particle diameter" is, for example, an average particle diameter. An "average particle diameter" refers to, for example, a median particle diameter (D₅₀).

D₅₀ refers to a particle size corresponding to a 50 % cumulative volume when a particle size distribution measured through a laser diffraction method is calculated from particles having a smaller particle size.

D90 refers to a particle size corresponding to a 90 % cumulative volume when a particle size distribution measured through a laser diffraction method is calculated from particles having a smaller particle size.

D10 refers to a particle size corresponding to a 10 % cumulative volume when a particle size distribution measured through a laser diffraction method is calculated from particles having a smaller particle size.

The term "metal" as used herein includes all of metals and metalloids such as silicon and germanium in an elemental or ionic state.

The term "alloy" as used herein refers to a mixture of two or more metals.

The term "electrode active material" as used herein refers to an electrode material that may undergo lithiation and delithiation.

The term "composite cathode active material" as used herein refers to a cathode material that may undergo lithiation and delithiation.

The term "anode active material" as used herein refers to an anode material that may undergo lithiation and delithiation.

The terms "lithiate" and "lithiating" as used herein refer to a process of adding lithium to an electrode active material.

The terms "delithiate" and "delithiating" as used herein refer to a process of removing lithium from an electrode active material.

The terms "charge" and "charging" as used herein refer to a process of providing electrochemical energy to a battery.

The terms "discharge" and "discharging" as used herein refer to a process of removing electrochemical energy from a battery.

The terms "positive electrode" and "cathode" as used herein refer to an electrode at which electrochemical reduction and lithiation occur during a discharging process.

The terms "negative electrode" and "anode" as used herein refer to an electrode at which electrochemical oxidation and delithiation occur during a discharging process.

While specific embodiments have been described, alternatives, modifications, variations, improvements, and substantial equivalents that are or may be presently unforeseen may arise to applicants or others skilled in the art. Therefore, the appended claims as filed and as they may be amended are intended to embrace all such alternatives, modifications, variations, improvements, and substantial equivalents.

### [Lithium secondary battery]

A lithium secondary battery according to an embodiment includes a cathode including lithium sulfide, an anode, an electrolyte layer disposed between the cathode and the anode, and a metal-organic framework. For example, the lithium secondary battery may include the metal-organic framework, thereby effectively removing hydrogen sulfide generated from lithium sulfide (Li₂S) included in the cathode during charging/discharging.

FIG. 1 is a cross-sectional view of a lithium secondary battery according to an exemplary embodiment. FIG. 2 is a cross-sectional view of a lithium secondary battery according to an exemplary embodiment. FIG. 3 is a cross-sectional view of a lithium secondary battery according to an exemplary embodiment. FIG. 4 is a cross-sectional view of a lithium secondary battery according to an exemplary embodiment. FIG. 5 is a cross-sectional view of a lithium secondary battery according to an exemplary embodiment.

Hereinafter, with reference to FIGS. 1 to 5, a lithium secondary battery including a cathode including lithium sulfide (Li₂S), an anode, an electrolyte layer disposed between the cathode and the anode, and a metal-organic framework will be described in more detail.

### [Metal-organic framework]

A lithium secondary battery 1 according to an embodiment may include a metal-organic framework.

For example, the metal-organic framework may be included in the cathode 10, the anode 20, the electrolyte layer 30, or an inactive member 40 to be described below.

According to an embodiment, the metal-organic framework may be included in the lithium secondary battery 1 as a separate component independent of the cathode 10; the anode 20; the electrolyte layer 30, and the inactive member 40.

In the present specification, the lithium secondary battery 1 is used to encompass a lithium secondary battery unit cell and a lithium secondary battery module. The metal-organic framework may be included inside a lithium secondary battery unit cell or a lithium secondary battery module in which a plurality of lithium secondary battery unit cells are connected.

The lithium secondary battery unit cell refers to a form in which the cathode 10, the anode 20, and the electrolyte layer 30 are included inside a case, and the lithium secondary battery unit module refers to a form in which the plurality of lithium secondary battery units cells are connected. For example, the metal-organic framework may be included as an independent component in an empty space inside the lithium secondary battery unit cell or an empty space outside the lithium secondary battery unit cell in an interior space of the lithium secondary battery module.

According to an embodiment, a size of the metal-organic framework may be in a range of 1 nm to 1 µm. In a secondary battery adopting sulfur (S), it is very difficult to suppress the generation of hydrogen sulfide itself, and thus it is required to eject hydrogen sulfide to the outside. In a lithium secondary battery adopting a general sulfide-based solid electrolyte and lithium sulfide, when lithium dendrites grow, mechanical properties may deteriorate.

On the other hand, the lithium secondary battery according to an embodiment may include the metal-organic framework, and thus hydrogen sulfide (H₂S), which is generated due to sulfur (S) being exposed to moisture, may be adsorbed simultaneously when hydrogen sulfide (H₂S) is generated, which may lower a rate at which hydrogen sulfide (H₂S) is generated externally, thereby obtaining an effect of reducing a decrease in ionic conductivity. Accordingly, generation of hydrogen sulfide (H₂S) may be reduced.

A function of capturing hydrogen sulfide in the lithium secondary battery according to an embodiment may vary according to the size, uniformity, pore size, and the like of the metal-organic framework. The size and uniformity of the metal-organic framework may be controlled to minimize a decrease in mechanical properties such as ionic conductivity and strength when sulfur (S) included in a cathode active material layer is exposed to moisture.

For example, the size of the metal-organic framework may be in a range of 1 nm to 1 µm, for example, 100 to 500 nm. In the present specification, a size refers to a major axis length. For example, when the metal-organic framework has another shape, the size refers to a length of a largest side of a structure. When the metal-organic framework is spherical, the size may refer to an average diameter.

For example, the metal-organic framework may have a large specific surface area of 100 m²/g or more, for example, 500 m²/g or more, or specifically 100 to 4,500 m²/g. The metal-organic framework may have a wide specific surface area within such a range, and thus ionic conductivity may be improved at room temperature.

For example, the pore size of the metal-organic framework may be in a size range capable of capturing hydrogen sulfide. A pore size may refer to an average diameter of pores when the pores are spherical and may refer to a major axis length when the pores have a different shape. The pore size may be, for example, in a range of 1 nm to 10 nm, for example, 1 nm to 8 nm, or for example, 1 nm to 5 nm. Specifically, the metal-organic framework may have a mesoporous structure with a uniform pore size. The metal-organic framework may be in a form of a plurality of primary particles dispersed in a matrix, and the plurality of primary particles may have a size (diameter) having a uniform size (diameter) distribution represented by Condition 1 below.

The metal-organic framework according to an embodiment may have a uniform size represented by Condition 1 below. For example, the metal-organic framework may have a diameter distribution close to an average particle diameter.$0.0 < σ 2 / μ < 1.0$ Condition 1

In Condition 1, σ2 may denote a variance of the plurality of primary particles measured by using dynamic laser scattering, and specifically, σ2 may denote the variance of the primary particles of the metal-organic framework, wherein the variance may correspond to a value equivalent to a square value of a standard deviation of an average particle diameter of the primary particles of the metal-organic framework. µ may denote the average particle diameter of the plurality of primary particles.

The average particle diameter of the plurality of primary particles described above may be in a range of about 1 nm to about 1 µm, for example, about 10 nm to about 900 nm, about 100 nm to about 800 nm, or specifically, about 300 nm to about 500 nm. A shape of the primary particle may include various shapes such as a spherical shape, an oval shape, a cylindrical shape, a triangular shape, a quadrangular shape, and a polyhedral shape, but the plurality of primary particles may have one shape. For example, the plurality of primary particles may be spherical. In Condition 1, σ2/µ may be in a range of 0.01 to 0.5, or for example, 0.1 to 0.3.

The metal-organic framework according to an embodiment may be a porous crystalline compound formed through a chemical bond between an organic ligand and a metal ion of Groups 2 to 15 or a metal ionic cluster of Groups 2 to 15. In this way, the metal-organic framework may have pores.

For example, the organic ligand may refer to an organic group capable of forming a chemical bond such as a coordination bond, an ionic bond, or a covalent bond. For example, the organic ligand may include two or more sites that may be bonded to the above-described metal ion. For example, the organic group may be bonded to the metal ion to form a stable structure.

The metal ion of Group 2 to Group 5 may include at least one selected from cobalt (Co), nickel (Ni), molybdenum (Mo), tungsten (W), ruthenium (Ru), osmium (Os), cadmium (Cd), beryllium (Be), calcium (Ca), barium (Ba), strontium (Sr), iron (Fe), manganese (Mn), chromium (Cr), vanadium (V), aluminum (Al), titanium (Ti), zirconium (Zr), copper (Cu), zinc (Zn), magnesium (Mg), hafnium (Hf), niobium (Nb), tantalum (Ta), rhenium (Re), rhodium (Rh), iridium (Ir), palladium (Pd), platinum (Pt), silver (Ag), scandium (Sc), yttrium (Y), indium (In), thallium (TI), silicon (Si), germanium (Ge), tin (Sn), lead (Pb), arsenic (As), antimony (Sb), and bismuth (Bi). The organic ligand may be a group derived from at least one selected from compounds having at least one functional group selected from aromatic dicarboxylic acids, aromatic tricarboxylic acids, imidazole-based compounds, tetrazole, 1,2,3-triazole, 1,2,4-triazole, pyrazole, aromatic sulfonic acids, aromatic phosphoric acids, aromatic sulfinic acids, aromatic phosphinic acids, bipyridine, amino groups, imino groups, amide groups, methanedithioic acid (-CS₂H) groups, methanedithioate anion (-CS2-) groups, pyridine groups, and pyrazine groups.

Examples of the above-described aromatic dicarboxylic acid and aromatic tricarboxylic acid may include a benzene dicarboxylic acid, a benzene tricarboxylic acid, a biphenyl dicarboxylic acid, a terphenyl-dicarboxylic acid, and the like.

The above-described organic ligand may be a group derived from, for example, compounds represented by formulas below.

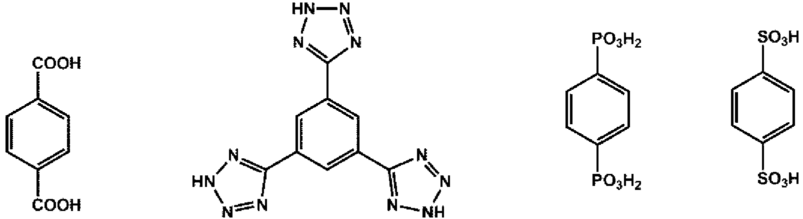

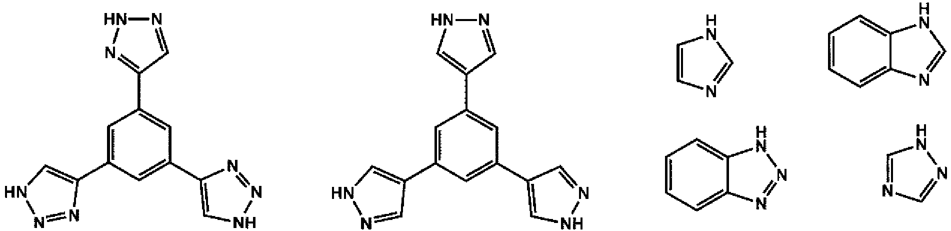

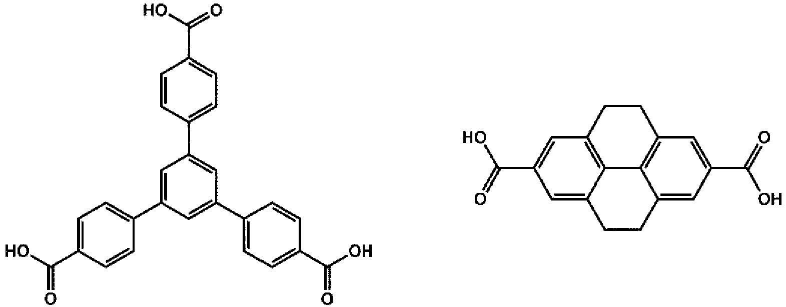

For example, the metal-organic framework may include a compound represented by Formula 1 below.

Formula 1 MₘOₖXₗLₚ

wherein, in Formula 1,
M is at least one selected from the group consisting of Ti⁴⁺, Zr⁴⁺, Mn⁴⁺, Si⁴⁺, Al³⁺, Cr³⁺, V³⁺, Ga³⁺, Mn³⁺, Zn³⁺, Mn²⁺, Mg²⁺, Fe²⁺, Fe³⁺, and Cu²⁺, m is an integer from 1 to 10, k is 0 or an integer from 1 to 10, l is 0 or an integer from 1 to 10, p is an integer from 1 to 10, X is OH⁻, Cl⁻, F⁻, I⁻, Br⁻, SO₄²⁻, NO₃⁻, ClO₄⁻, PF₆⁻, BF₃⁻, -(COO)n-, R₁-(SO₃)ₙ-, or R₁-(PO₃)ₙ-, R₁ is at least one selected from hydrogen and a C1-C30 alkyl group, n is an integer from 1 to 4, L is a ligand containing q carboxylate groups (*COO-#) and a radical R, q is an integer from 1 to 6, * denotes a binding position of a carboxylate group with respect to R, # denotes a binding position of a carboxylate group with respect to a metal ion M, and R is selected from substituted or unsubstituted C1-C30 alkyl, substituted or unsubstituted C2-C30 alkenyl, substituted or unsubstituted C2-C30 alkynyl, substituted or unsubstituted mono- and polycyclic-C1-C30 aryl, and substituted or unsubstituted mono- and polycyclic-C1-C30 heteroaryl.

In Formula 1, m is 1, 2, 3, or 4, for example, 1 or 3. k and l are each 0, 1, 2, 3, or 4, for example, 0 or 1. p is 1, 2, 3, or 4, for example, 1 or 3.

In the definition of R, substituted C1-C30 alkyl, substituted C2-C30 alkene, substituted C2-C30 alkynyl, substituted mono- and polycyclic-C1-C30 aryl, and mono- and polycyclic-C1-C30 heteroaryl may have at least one substituent selected from the group consisting of C1-C10 alkyl, C2-C10 alkenyl, C2-C10 alkynyl, a C3-C10 carbon ring, C1-C10 heteroalkyl, C1-C10 haloalkyl, C6-C10 aryl, C3-C10 heteroaryl, a C5-C30 hetero ring, C1-C10 alkoxy, C6-C10 aryloxy, C3-C10 heteroaryloxy, C1-C10 alkylthio, C1-C10 heteroalkylthio, C6-C10 arylthio, C3-C10 heteroarylthio, a halogen atom, -CN, -CF₃, -OH, -CHCl₂, -CH₂OH, -CH₂CH₂OH, -NH₂, -CH₂NH₂, -COOH, -COONH₂,-SO₃H, -CH₂SO₂CH₃, - PO₃H₂, a C1-C30 alkyl group substituted with a halogen atom (for example, CCF₃, CHCF₂, CH₂F, or CCl₃), C1-C30 alkoxy, C2-C30 alkoxyalkyl, a hydroxy group, a nitro group, a cyano group, an amino group, an amidino group, hydrazine, hydrazone, a carboxyl group or a salt thereof, a sulfonyl group, a sulfamoyl group, a sulfonic acid group or a salt thereof, a phosphoric acid or a salt thereof, a C1-C30 alkyl group, a C2-C30 alkenyl group, a C2-C30 alkynyl group, a C1-C30 heteroalkyl group, a C6-C30 aryl group, a C6-C30 arylalkyl group, a C6-C30 heteroaryl group, a C7-C30 heteroarylalkyl group, a C6-C30 heteroaryloxy group, a C6-C30 heteroaryloxyalkyl group, and a C6-C30 heteroarylalkyl group.

The metal-organic framework may be a compound represented by Formula 2 below.

Formula 2 M'ₘOₖX'ₗL'ₚ

wherein, in Formula 2, M' may be at least one selected from Ti4+, Zr4+, V3+, Zn+3, Fe2+, Fe³⁺, and Cu2+, L' may be at least one selected from the group consisting of C₆H₄(CO₂⁻)₂ (terephthalate), C₂H₂(CO₂⁻)₂ (fumarate), C₄H₄(CO₂⁻)₂ (muconate), C₅H₃S(CO₂⁻)₂ (2,5-thiophenedicarboxylate), C₆H₂N₂(CO₂)₂ (2,5-pyrazine dicarboxylate), C₂H₄(CO₂⁻)₂ (succinate), C₃H₆(CO₂⁻)₂ (glutarate), C₄H₈(CO₂⁻)₂ adipate, C₁₀H₆(CO₂⁻)₂ (naphtalene-2,6-dicarboxylate), C₁₂H₈(CO₂⁻)₂ (biphenyl-4,4'-dicarboxylate), C₁₂H₈N₂(CO₂⁻)₂ (azobenzenedicarboxylate), C₆H₃(CO₂⁻)₃ (benzene-1,2,4-tricarboxylate), C₆H₃(CO₂⁻)₃ (benzene-1,3,5-tricarboxylate), C₂₄H₁₅(CO₂⁻)₃ (benzene-1,3,5-tribenzoate), C₆H₂(CO₂⁻)₄ (benzene-1,2,4,5-tetracarboxylate), C₁₀H₄(CO₂-)₄ (naphtalene-2,3,6,7-tetracarboxylate), C₁₀H₄(CO₂⁻)₄ (naphtalene-1,4,5,8-tetracarboxylate), and C₁₂H₆(CO₂⁻)₄ (biphenyl-3,5,3',5'-tetracarboxylate), X' may be at least one selected from OH-, Cl-, F-, CH₃COO-, PF₆-, and ClO₄-, m may be an integer from 1 to 8, k may be 0 or an integer from 1 to 8, l may be 0 or an integer from 1 to 8, and p may be an integer from 1 to 8.

According to an embodiment, the metal-organic framework may include, for example, at least one group selected from the group consisting of Ti₈O₈(OH)₄[O₂C-C₆H₄-CO₂]_{6,} Ti₈O₈(OH)₄[O₂C-C₆H₃(NH₂)-CO₂]₆, VO[C₆H₄(CO₂)₂], Al(OH)[C₆H₄(CO₂)₂], Cr(OH)[C₆H₄(CO₂)₂], Al(OH)[C₁₀H₆(CO₂)₂], Al₁O(OH)₁₈(H₂O)₃[C₆H₃-(CO₂)₃]₆.nH₂O, Cr₃OXₗ[C₆H₄(CO₂)₂]₃ (X is at least one selected from H, OH⁻, Cl⁻, F⁻, CH₃COO⁻, PF₆⁻, and ClO₄⁻, and l is 0 or an integer from 1 to 8), Cr₃OXₗ[C₁₂H₈(CO₂)₂]₃ (X is at least one selected from H, OH-, Cl-, F-, CH₃COO-, PF₆-, and ClO₄-, and l is 0 or an integer from 1 to 8), Cr₃OXₗ[C₆H₃(CO₂)₃]₃ (X is at least one selected from H, OH⁻, Cl⁻, F⁻, CH₃COO⁻, PF₆⁻, and ClO₄⁻, and l is 0 or an integer from 1 to 8), Al₈(OH)₁₅(H₂O)₃[C₆H₃(CO₂)₃]₃, V₃OXₗ[C₆H₃(CO₂)₃]₃ (X is at least one selected from H, OH-, Cl⁻, F-, CH₃COO-, PF₆-, and ClO₄-, and l is 0 or an integer from 1 to 8), ZrO[C₆H₄(CO₂)₂], and Ti₈O₈(OH)₄[O₂C-C₆H₃(NH₂)-CO₂]_{6.}

Specifically, the metal-organic framework may include Ti₈O₈(OH)₄[O₂C-C₆H₄-CO₂]₆, Cu(bpy)(H₂O)₂(BF₄)₂(bpy) (bpy=4,4'-bipyridine), Zn₄O(O₂C-C₆H₄-CO₂)₃ (Zn-terephthalic acid- metal-organic framework (MOF) or Zn-MOF), Al(OH){O₂C-C₆H₄-CO₂}, Cu-BTC MOF (copper benzene-l,3,5-tricarboxylate, ZIF-8 (2-methyl imidazole zinc salt), MIL 53 (aluminum terephthalate), Fe-BTC (iron 1,3,5-benzenetricarboxylate), KRICT F100 (iron trimesate), KRICT C100 (chromium terephthalate), KRICT C200 (copper trimesate), KRICT Z100 (zirconium carboxylate), or a combination thereof, but one or more embodiments are not necessarily limited thereto.

According to an embodiment, the pore size of the MOF may be 5 nm or less. For example, the pore size of the MOF may be in a range of 1 nm to 5 nm, 1 nm to 4 nm, or 1 nm to 3 nm.

### [Cathode]

A cathode for a lithium secondary battery according to an embodiment may include a cathode current collector and a cathode active material layer disposed on the cathode current collector, and the cathode active material layer may include lithium sulfide (Li₂S).

### [Cathode: Cathode active material layer]

The cathode according to an embodiment may include the cathode current collector and the cathode active material layer disposed on the cathode current collector. The cathode active material layer may include the above-described composite cathode active material.

According to an embodiment, the cathode active material layer may further include a solid electrolyte. For example, the cathode may include the composite cathode active material and the solid electrolyte to have further reduced internal resistance. Therefore, the cycle characteristics of a secondary battery including the cathode may be further improved.

Referring to FIGS. 1 to 5, the cathode 10 includes a cathode current collector 11 and a cathode active material layer 12 disposed on the cathode current collector 11. The cathode active material layer 12 includes lithium sulfide (Li₂S). For example, the cathode active material layer 12 may include the MOF described above.

According to an embodiment, the cathode active material layer may include lithium sulfide (Li₂S) and an ion-conductive lithium salt. According to an embodiment, the cathode active material layer 12 may include a Li₂S-containing composite, and the Li₂S-containing composite may include a lithium salt (Li₂S) and an ion-conductive lithium salt. For example, the Li₂S-containing composite may include a composite of a lithium salt (Li₂S) and an ion-conductive lithium salt.

For example, the composite of Li₂S and a lithium salt has ductility and thus is distinguished from an oxide-based solid electrolyte of a related art that has brittleness, for example, an oxide-based solid electrolyte with a garnet structure. The composite of Li₂S and a lithium salt has lithium ion conductivity and is distinguished from a lithium-free metal oxide of a related art, for example, alumina which does not have lithium ion conductivity. The composite of Li₂S and a lithium salt is, for example, a product obtained by mechanically milling Li₂S and a lithium salt. The composite of Li₂S and a lithium salt is, for example, a product of a mechanochemical reaction between Li₂S and a lithium salt and thus is distinguished from a simple mixture of Li₂S and a lithium salt. The simple mixture of Li₂S and a lithium salt may fail to maintain a dense interface between Li₂S and a lithium salt to provide high interfacial resistance, resulting in an increase in internal resistance of a solid electrolyte separator.

The composite of Li₂S and a lithium salt may be represented by Li₂S-LiₐX_{b} (1≤a≤5 and 1≤b≤5). X is I, Br, Cl, F, H, O, Se, Te, N, P, As, Sb, Al, B, OCl, PF₆, BF₄, SbF₆, AsF₆, ClO₄, AlO₂, AlCl₄, NO₃, CO₃, BH₄, SO₄, BO₃, PO₄, NCl, NCl₂, BN₂, or a combination thereof. a is, for example, 1, 2, 3, 4, or 5. b is, for example, 1, 2, 3, 4, or 5. The lithium salt is a compound that does not include, for example, sulfur (S).

According to an embodiment, the ion-conductive lithium salt may be a binary compound or a ternary compound. For example, the ion-conductive lithium salt may be a binary compound including lithium and one type of element selected from Groups 13 to 17 of the periodic table of elements. For example, the ion-conductive lithium salt may be a ternary compound including lithium and two types of elements selected from Groups 13 to 17 of the periodic table of elements. The binary compound may include, for example, LiI, LiBr, LiCl, LiF, LiH, Li₂O, Li₂Se, Li₂Te, Li₃N, Li₃P, Li₃As, Li₃Sb, Li₃Al₂, LiB₃, or a combination thereof. The composite of Li₂S and a lithium salt may include the binary compound, and thus the ionic conductivity of the composite of Li₂S and a lithium salt may be further improved. As a result, the cycle characteristics of a lithium secondary battery including the cathode may be further improved.

The ternary compound may include, for example, Li₃OCl, LiPF₆, LiBF₄, LiSbF₆, LiAsF₆, LiClO₄, LiAlO₂, LiAlCl₄, LiNO₃, Li₂CO₃, LiBH₄, Li₂SO₄, Li₃BO₃, Li₃PO₄, Li₄NCl, Li₅NCl₂, Li₃BN₂, or a combination thereof. The composite may include such a ternary compound, and thus the ionic conductivity of the composite may be further improved. The composite cathode active material may include such a composite, and thus the internal resistance of the cathode may further decrease. As a result, the cycle characteristics of a solid secondary battery including such a solid electrolyte separator may be further improved.

According to an embodiment, in the composite of Li₂S and a lithium salt, a molar ratio of Li₂S to a lithium salt may be, for example, in a range of 50:50 to 95:5, 60:40 to 95:5, 60:40 to 90:10, 65:35 to 90:10, 65:35 to 85:15, or 70:30 to 85:15. In the composite of Li₂S and a lithium salt, the molar ratio of Li₂S to the lithium salt may be, for example, in a range of 50:50 to 95:5, 50:50 to 90:10, 50:50 to 85:15, 50:50 to 80:20, 50:50 to 75:25, or 50:50 to 70:30. L₂S and the lithium salt may have a molar ratio within such a range, and thus the cycle characteristics of a lithium secondary battery including the composite cathode active material may be further improved. When a mole fraction of Li₂S is excessively high, an effect of improving ionic conductivity by the lithium salt may be insignificant. When the mole fraction of Li₂S is excessively high, the energy density of a lithium secondary battery including the composite cathode active material may decrease.

According to an embodiment, the cathode active material layer may further include a carbon-based material. For example, the Li₂S-containing composite may further include a carbon-based material. For example, the Li₂S-containing composite may be a composite of Li₂S, an ion-conductive lithium salt, and a carbon-based material.

For example, as the carbon-based material, for example, any material may be used as long as the material is a material including carbon atoms and is used as a conductive material in the art. The carbon-based material may be, for example, crystalline carbon, amorphous carbon, or a combination thereof. The carbon-based material may be, for example, a calcined material of a carbon precursor. The carbon-based material may include, for example, a carbon nanostructure. The carbon nanostructure may include, for example, a one-dimensional carbon nanostructure, a two-dimensional carbon nanostructure, a three-dimensional carbon nanostructure, or a combination thereof. The carbon nanostructure may include, for example, carbon nanotubes, carbon nanofibers, carbon nanobelts, carbon nanorods, graphene, or a combination thereof.

The carbon-based material may be, for example, a porous carbon-based material or a non-porous carbon-based material. The porous carbon-based material may include, for example, periodic and regular two-dimensional or three-dimensional pores. The porous carbon-based material may include, for example, carbon black such as Ketjen black, acetylene black, Denka black, thermal black, or channel black; graphite; activated carbon; or a combination thereof. The form of the carbon-based material may be, for example, a particle form, a sheet form, a flake form, or the like, but one or more embodiments are not limited thereto. Any material may be used as long as the material is used as a carbon-based material in the art.

The carbon-based material may include, for example, a fibrous carbon-based material. A composite of Li₂S, a lithium salt, and a carbon-based material may include a fibrous carbon-based material, and thus the electronic conductivity of the composite of Li₂S, a lithium salt, and a carbon-based material may be further improved. The composite of Li₂S, a lithium salt, and a carbon-based material may include the fibrous carbon-based material, and thus electronic conduction may be more easily performed from a surface to the inside of the composite of Li₂S, a lithium salt, and a carbon-based material. The internal resistance of a dry cathode film including the composite of Li₂S, a lithium salt, and a carbon-based material may be reduced, and the cycle characteristics of a lithium secondary battery including the dry cathode film may be further improved.

An aspect ratio of the fibrous carbon-based material may be, for example, 2 or more, 3 or more, 4 or more, 5 or more, 10 or more, or 20 or more. The aspect ratio of the fibrous carbon-based material may be, for example, in a range of 2 to 30, 3 to 30, 4 to 30, 5 to 30, 10 to 30, or 20 to 30. The aspect ratio of the fibrous carbon-based material may be, for example, in a range of 2 to 30, 2 to 20, 2 to 10, 2 to 8, 2 to 5, or 2 to 4. The fibrous carbon-based material may have an aspect ratio within such a range so that the overall electronic conductivity of the composite of Li₂S, a lithium salt, and a carbon-based material may be improved, and an imbalance of local electronic conductivity in the composite of Li₂S, a lithium salt, and a carbon-based material may be further alleviated.

The fibrous carbon-based material may include, for example, a carbon nanostructure. The carbon nanostructure may include, for example, carbon nanofibers (CNFs), carbon nanotubes (CNTs), carbon nanobelts, carbon nanorods, or a combination thereof.

The carbon nanostructure may form a primary carbon nanostructure consisting of one carbon nanostructure and a secondary carbon nanostructure in which a plurality of carbon nanostructures aggregate.

A diameter of the primary carbon nanostructure may be, for example, in a range of 1 nm to 200 nm, 1 nm to 150 nm, 1 nm to 100 nm, 1 nm to 50 nm, 1 nm to 30 nm, or 1 nm to 20 nm. A length of the primary carbon nanostructure may be, for example, in a range of 10 nm to 2 µm, 10 nm to 1.5 µm, 10 nm to 1 µm, 10 nm to 500 nm, 10 nm to 400 nm, 10 nm to 300 nm, 10 nm to 200 nm, or 10 nm to 100 nm. The diameter and length of the primary carbon nanostructure may be measured from a scanning electron microscope (SEM) or transmission electron microscope (TEM) image. Alternatively, the diameter and/or length of the primary carbon nanostructure may be measured through laser diffraction.

The secondary carbon nanostructure may be, for example, a structure formed by primary carbon nanostructures being entirely or partially clustered to constitute a bundle-type or rope-type nanostructure. The secondary carbon nanostructure may include, for example, a bundle-type carbon nanostructure, a rope-type carbon nanostructure, or a combination thereof. A diameter of the secondary carbon nanostructure may be, for example, in a range of 2 nm to 200 nm, 3 nm to 150 nm, 5 nm to 100 nm, 5 nm to 50 nm, 5 nm to 30 nm, or 5 nm to 20 nm. A length of the secondary carbon nanotube structure may be, for example, in a range of 20 nm to 2 µm, 30 nm to 1.5 µm, 50 nm to 1 µm, 50 nm to 500 nm, 50 nm to 400 nm, 50 nm to 300 nm, 50 nm to 200 nm, or 50 nm to 100 nm. The diameter and length of the secondary carbon nanostructure may be measured from a SEM image or an optical microscope. Alternatively, the diameter and/or length of the secondary carbon nanostructure may be measured through laser diffraction. The secondary carbon nanostructure may be dispersed, for example, in a solvent or the like to be converted into the primary carbon nanostructure and then may be used to prepare the composite of Li₂S, a lithium salt, and a carbon-based material.

A content of a lithium salt in the composite of Li₂S, a lithium salt, and a carbon-based material may be, for example, in a range of 1 to 40 wt%, 5 to 35 wt%, 10 to 35 wt%, 15 to 35 wt%, 20 to 35 wt%, or 25 to 35 wt% of the total weight of the composite of Li₂S, a lithium salt, and a carbon-based material. When the content of the lithium salt excessively increases, the energy density of a lithium secondary battery may decrease. When the content of the lithium salt is excessively low, the ionic conductivity of the composite of Li₂S, a lithium salt, and a carbon-based material may decrease so that the internal resistance of a dry cathode film may increase. As a result, the cycle characteristics of a lithium secondary battery including the dry cathode film may deteriorate.

In the composite of Li₂S, a lithium salt, and a carbon-based material, a molar ratio of Li₂S to the lithium salt may be, for example, in a range of 50:50 to 95:5, 60:40 to 95:5, 60:40 to 90:10, 65:35 to 90:10, 65:35 to 85:15, or 70:30 to 85:15. In the composite of Li₂S, a lithium salt, and a carbon-based material, the molar ratio of Li₂S to the lithium salt may be, for example, in a range of 50:50 to 95:5, 50:50 to 90:10, 50:50 to 85:15, 50:50 to 80:20, 50:50 to 75:25, or 50:50 to 70:30. The molar ratio of Li₂S to the lithium salt may be within such a range, and thus the cycle characteristics of a lithium secondary battery including a dry cathode film may be further improved. When a mole fraction of Li₂S is excessively high, an effect of improving ionic conductivity by the lithium salt may be insignificant. When the mole fraction of Li₂S is excessively high, the energy density of a lithium secondary battery including the composite cathode active material may decrease.

According to an embodiment, the content of a carbon-based material included in the composite of Li₂S, a lithium salt, and a carbon-based material may be, for example, in a range of 1 to 20 wt%, 5 to 20 wt%, or 10 to 20 wt% of the total weight of the composite. When the content of the carbon-based material excessively increases, the energy density of a cathode film and a lithium secondary battery may decrease. When the content of the carbon-based material excessively decreases, the electronic conductivity of the composite of Li₂S, a lithium salt, and a carbon-based material may decrease, and thus the internal resistance of a cathode film may increase. As a result, the cycle characteristics of a secondary battery may deteriorate.

According to an embodiment, the composite of Li₂S and a lithium salt or the composite of Li₂S, a lithium salt, and a carbon-based material may include, for example, a solid solution of Li₂S and a lithium salt. The composite may include the solid solution of Li₂S and a lithium salt, and thus the ionic conductivity of the composite may increase. For example, the solid solution of Li₂S and a lithium salt may include lithium ions disposed in a Li₂S crystallite, and thus the ionic conductivity of the solid solution of Li₂S and a lithium salt may be improved as compared to Li₂S. As a result, the ionic conductivity of the composite may be improved, and the internal resistance of the composite may be reduced. The cathode may include such a composite, and thus the internal resistance of the cathode may further decrease. As a result, the cycle characteristics of a lithium secondary battery including such a cathode may be further improved.

According to an embodiment, a size of a Li₂S crystallite obtained from an X-ray diffraction (XRD) spectrum of the composite of Li₂S and a lithium salt or the composite of Li₂S, a lithium salt, and a carbon-based material may be, for example, 30 nm or less, 25 nm or less, or 20 nm or less. A size of the Li₂S crystallite obtained from the XRD spectrum of the composite may be, for example, in a range of 1 nm to 20 nm, 1 nm to 15 nm, or 3 nm to 10 nm. The size of the Li₂S crystallite may decrease, and thus a contact area between Li₂S and a lithium salt may further increase. The contact area between Li₂S and the lithium salt may further increase, and thus the ionic conductivity of the composite of Li₂S and a lithium salt may further increase. The cathode may include such a composite, and thus the internal resistance of the cathode may further decrease. As a result, the cycle characteristics of a solid secondary battery including such a cathode may be further improved.

For example, Li₂S has low ionic conductivity, and thus, in order to solve such a drawback, Li₂S forms a composite with a lithium salt. The composite of Li₂S and a lithium salt or the composite of Li₂S, a lithium salt, and a carbon-based material may provide improved ionic conductivity as compared to Li₂S alone. A content of Li₂S in the Li₂S-containing composite may be in a range of 50 to 95 wt%, 50 to 90 wt%, 50 to 80 wt%, or 50 to 70 wt% of the total weight of the Li₂S-containing composite. The composite may have a content of Li₂S within such a range, and thus a cathode having improved ionic conductivity and improved durability may be prepared. A content of the lithium salt in the composite of Li₂S and a lithium salt may be in a range of 5 to 50 wt%, 10 to 50 wt%, 20 to 50 wt%, or 30 to 50 wt% of the total weight of the Li₂S-containing composite.

A Mohs hardness of each of the lithium salt and the carbon-based material may be greater than that of Li₂S. The Mohs hardness of Li₂S is, for example, 0.6 or less. The Mohs hardness of the lithium salt may be 0.7 or more, 0.8 or more, 0.9 or more, 1.0 or more, 1.5 or more, or 2.0 or more. The lithium salt may have a Mohs hardness within such a range so that Li₂S may be more easily pulverized during a milling process, and the solid solution of Li₂S and a lithium salt may be more easily formed. The Mohs hardness of LiI is, for example, 2.0. A Mohs hardness of each carbon-based material may be 0.7 or more, 0.8 or more, 0.9 or more, 1.0 or more, 1.2 or more, or 1.5 or more. The carbon-based material may have a Mohs hardness within such a range so that Li₂S may be more easily pulverized during a milling process, and the composite of Li₂S, a lithium salt, and a carbon-based material may be more easily formed. A Mohs hardness of CNFs is, for example, 1.5.

An ionic conductivity of the composite of Li₂S and a lithium salt or a composite of Li₂S, a lithium salt, and a carbon-based material may be, for example, 1×10-5 S/cm or more, 2×10-5 S/cm or more, 4×10-5 S/cm or more, 6×10-5 S/cm or more, 8×10-5 S/cm or more, or 1×10-4 S/cm or more at a temperature of 25 °C. Ionic conductivity may be measured by using, for example, electrochemcal impedance spectroscopy, a direct current (DC) polarization method, or the like. The composite of Li₂S and a lithium salt may have an ionic conductivity within such a range, and thus the internal resistance of a cathode including the composite of Li₂S and a lithium salt may further decrease. The cycle characteristics of a solid secondary battery including the cathode may be improved.

According to an embodiment, a content of the Li₂S-containing composite may be in a range of 40 to 90 wt%, 40 to 80 wt%, 50 to 80 wt%, or 50 to 70 wt% with respect to the total weight of the cathode active material layer 12. When the content of the Li₂S-containing composite excessively decreases, the energy density of a secondary battery may decrease. When the content of the Li₂S-containing composite excessively increases, the deterioration of the cathode may be accelerated due to a volume change of the cathode during charging and discharging. As a result, the cycle characteristics of the lithium secondary battery 1 may be deteriorated.

The cathode active material layer 12 may additionally include a composite cathode active material in addition to the above-described Li₂S-containing composite.

The composite cathode active material may include, for example, a Li₂S-containing composite. A Li₂S composite may include, for example, a composite of Li₂S and a carbon-based material, a composite of Li₂S, a carbon-based material, and a solid electrolyte, a composite of Li₂S and a solid electrolyte, a composite of Li₂S and a lithium salt, a composite of Li₂S and a metal carbide, a composite of Li₂S, a carbon-based material, and a metal carbide, a composite of Li₂S and a metal nitride, a composite of Li₂S, a carbon-based material, and a metal nitride, or a combination thereof.

The composite of Li₂S and a carbon-based material includes Li₂S and a carbon-based material. The carbon-based material is defined as for the above-described carbon-based material of the Li₂S-containing composite. A method of preparing a composite of Li₂S and a carbon-based material may be a dry method, a wet method, or a combination thereof, but one or more embodiments are not limited thereto. Any method may be used as long as the method is used in the art. The method of preparing a composite of Li₂S and a carbon-based material may include, for example, milling, heat treatment, deposition, or the like, but one or more embodiments are not necessarily limited thereto. Any method may be used as long as the method is used in the art.

The composite of Li₂S, a carbon-based material, and a solid electrolyte may include a carbon-based material and a solid electrolyte. The carbon-based material is defined as for the above-described Li₂S-containing composite. As the solid electrolyte, for example, any material may be used as long as the material is used as an ion-conductive material in the art. The solid electrolyte is, for example, an inorganic solid electrolyte. The solid electrolyte is, for example, a crystalline solid electrolyte, an amorphous solid electrolyte, or a combination thereof. The solid electrolyte is, for example, a sulfide-based solid electrolyte, an oxide-based solid electrolyte, or a combination thereof. The sulfide-based solid electrolyte may include, for example, Li, S, and P and may optionally further include a halogen element. The sulfide-based solid electrolyte may be selected from sulfide-based solid electrolytes used in an electrolyte layer. For example, the sulfide-based solid electrolyte may have an ionic conductivity of 1×10-5 S/cm or more at room temperature. The oxide-based solid electrolyte may include, for example, Li, O, and a transition metal element and may optionally further include other elements. For example, the oxide-based solid electrolyte may be a solid electrolyte having an ionic conductivity of 1×10-5 S/cm or more at room temperature. The oxide-based solid electrolyte may be selected from oxide-based solid electrolytes used in an electrolyte layer.

The composite of Li₂S and a solid electrolyte includes a solid electrolyte. The solid electrolyte is defined as for the above described composite of Li₂S, a carbon-based material, and a solid electrolyte.

The composite of Li₂S and a lithium salt includes Li₂S and a lithium salt. The lithium salt is defined as for the above-described lithium salt of the composite cathode active material. The lithium salt is particularly at least one lithium halide compound selected from LiF, LiCl, LiBr, and LiI. The composite of Li₂S and a lithium salt may be, for example, a composite of Li₂S and a lithium halide. The composite of Li₂S and a lithium salt may include a lithium halide compound and thus may provide further improved ionic conductivity. The composite of Li₂S and a lithium salt may be distinguished from a simple mixture of Li₂S, a carbon-based material, and a lithium salt. A simple mixture of Li₂S and a lithium salt may fail to maintain a dense interface between Li₂S and a lithium salt to provide high interfacial resistance, resulting in a reduction in lifespan characteristics of an all-solid-state secondary battery.

The composite of Li₂S and a metal carbide includes a metal carbide. The metal carbide is, for example, a two-dimensional metal carbide. The two-dimensional metal carbide is represented, for example, by Mₙ₊₁CₙTₓ (M is a transition metal, T is a terminal group, T is O, OH, and/or F, n=1, 2, or 3, and x is the number of terminal groups). The two-dimensional metal carbide is, for example, Ti₂CTₓ, (Ti₀.5, Nb₀.₅)₂CTₓ, Nb₂CTₓ, V₂CTₓ, Ti₃C₂Tₓ, (V₀.5, Cr₀.₅)₃C₂Tₓ, Ti₃CNTₓ, Ta₄C₃Tₓ, Nb₄C₃Tₓ, or a combination thereof. A surface of the two-dimensional metal carbide is terminated with O, OH, and/or F.

The composite of Li₂S, a carbon-based material, and a metal carbide includes a carbon-based material and a metal carbide. The carbon-based material is defined as for the above-described composite of Li₂S and a carbon-based material. The metal carbide is defined as for the above-described composite of Li₂S and a metal carbide.

The composite of Li₂S and a metal nitride includes a metal nitride. The metal nitride is, for example, a two-dimensional metal nitride. The two-dimensional metal nitride is represented, for example, by Mₙ₊₁NₙTₓ (M is a transition metal, T is a terminal group, T is O, OH, and/or F, n=1, 2, or 3, and x is the number of terminal groups). A surface of the two-dimensional metal nitride is terminated with O, OH, and/or F.

The composite of Li₂S, a carbon-based material, and a metal nitride includes a carbon-based material and a metal nitride. The carbon-based material is defined as for the above-described composite of Li₂S and a carbon-based material. The metal carbide is defined as for the above-described composite of Li₂S and a metal nitride.

For example, the cathode active material layer 12 may additionally include a sulfide-based compound that is distinguished from the above-described Li₂S-containing composite. The sulfide-based compound may be, for example, a compound including a sulfur element and a metal element other than Li. For example, the sulfide-based compound may be a compound including a sulfur element and at least one of metal elements which have an atomic weight of 10 or more and belong to Groups 1 to 14 of the periodic table of elements. The sulfide-based compound may be, for example, FeS₂, VS₂, NaS, MnS, FeS, NiS, CuS, or a combination thereof. The cathode active material layer may additionally include the sulfide-based compound so that the cycle characteristics of a lithium secondary battery may be further improved. A content of the sulfide-based compound included in the cathode active material layer 12 may be 10 wt% or less, 5 wt% or less, 3 wt% or less, or 1 wt% or less of the total weight of the cathode active material layer 12.

### [Cathode: Solid electrolyte]

The cathode active material layer 12 may further include, for example, a solid electrolyte. The solid electrolyte may be, for example, a sulfide-based solid electrolyte. The solid electrolyte included in the cathode 10 may be the same as or different from a solid electrolyte included in an electrolyte layer 30. The solid electrolyte may be as defined in a part of the electrolyte layer 30.

A D₅₀ average particle diameter of the solid electrolyte included in the cathode active material layer 12 may be smaller than a D₅₀ average particle diameter of the solid electrolyte included in the electrolyte layer 30. For example, the D₅₀ average particle diameter of the solid electrolyte included in the cathode active material layer 12 may be 90 % or less, 80 % or less, 70 % or less, and 60 % or less, 50 % or less, 40 % or less, 30 % or less, or 20 % or less of the D₅₀ average particle diameter of the solid electrolyte included in the electrolyte layer 30. The D₅₀ average particle diameter is, for example, a median particle diameter (D₅₀). The median particle diameter (D₅₀) is a particle size corresponding to a 50 % cumulative volume when a particle size distribution measured through a laser diffraction method is calculated from particles having a smaller particle size.

The solid electrolyte may be included at a content of 10 to 60 parts by weight, 10 to 50 parts by weight, 20 to 50 parts by weight, or 30 to 50 parts by weight with respect to 100 parts by weight of the cathode active material layer 12. When the content of the solid electrolyte excessively decreases, due to an increase in internal resistance of the cathode, the cycle characteristics of a secondary battery may deteriorate. When the content of the sulfide-based solid electrolyte excessively increases, the energy density of the secondary battery 1 may decrease.

### [Cathode: Conductive material]

The cathode active material layer 12 may further include a conductive material. The conductive material may be, for example, a carbon-based conductive material, a metal-based conductive material, or a combination thereof. The carbon-based conductive material may be, for example, graphite, carbon black, acetylene black, Ketjen black, a carbon fiber, or a combination thereof, but one or more embodiments are not limited thereto. Any material may be used as long as the material is used as a carbon-based conductive material in the art. The metal-based conductive material may be a metal powder, a metal fiber, or a combination thereof, but one or more embodiments are not limited thereto. Any material may be used as long as the material is used as a metal-based conductive material in the art. A content of the conductive material included in the cathode active material layer 12 may be, for example, in a range of 1 wt% to 30 wt%, 1 wt% to 20 wt%, or 1 wt% to 10 wt% of the total weight of the cathode active material layer 12.

The cathode active material layer 12 may include a carbon-based material, and the carbon-based material may be disposed only on the composite cathode active material. The cathode active material layer 12 may not additionally include a separate carbon-based material other than the composite cathode active material including the carbon-based material. The cathode active material layer may not include the separate carbon-based material so that the energy density of the cathode and the secondary battery 1 may be improved and a manufacturing process may be simplified.

### [Cathode: Binder]

The cathode active material layer 12 may further include a binder. The binder may include, for example, styrene-butadiene rubber (SBR), polytetrafluoroethylene, polyvinylidene fluoride, polyethylene, and the like, but one or more embodiments are not limited thereto. Any material may be used as long as the material is used as a binder in the art. A content of the binder included in the cathode active material layer 12 may be, for example, in a range of 1 wt% to 10 wt% of the total weight of the cathode active material layer 12. The binder may be omitted.

### [Cathode: Other additives]

In addition to the above-described composite cathode active material, solid electrolyte, binder, and conductive material, the cathode active material layer 12 may further include additives such as a filler, a coating agent, a dispersant, and an ion-conductive adjuvant.

As a filler, a coating agent, a dispersant, an ion-conductive adjuvant, and the like that may be included in the cathode active material layer 12, known materials generally used in electrodes of lithium secondary batteries may be used.

### [Cathode: Cathode current collector]

The cathode current collector 11 is provided as a plate, foil, or the like consisting of, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The cathode current collector 11 may be omitted. A thickness of the cathode current collector 11 is, for example, in a range of 1 µm to 100 µm, 1 µm to 50 µm, 5 µm to 25 µm, or 10 µm to 20 µm.

The cathode current collector 11 may include, for example, a base film and a metal layer disposed on one side or both sides of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. The base film may be, for example, an insulator. The base film may include an insulating thermoplastic polymer, and thus when a short circuit occurs, the base film may soften or liquefy to interrupt the operation of a battery, thereby suppressing a rapid increase in current. The metal layer may include, for example, indium (In), copper (Cu), magnesium (Mg), stainless steel, titanium (Ti), iron (Fe), cobalt (Co), nickel (Ni), zinc (Zn), aluminum ( Al), germanium (Ge), or an alloy thereof. The metal layer may serve as an electrochemical fuse to be cut when an overcurrent occurs, thereby performing a short circuit prevention function. A thickness of the metal layer may be adjusted to adjust a limit current and a maximum current. The metal layer may be electrodeposited or deposited on the base film. When the thickness of the metal layer is decreased, a limit current and/or a maximum current of the cathode current collector 11 may be decreased, and thus the stability of a lithium secondary battery during a short circuit may be improved. A lead tab may be added onto the metal layer for external connection. The lead tab may be welded to the metal layer or a metal layer/base film stack through ultrasonic welding, laser welding, spot welding, or the like. While the base film and/or the metal layer is melted during welding, the metal layer may be electrically connected to the lead tab. In order to more strongly weld the metal layer and the lead tab, a metal chip may be added between the metal layer and the lead tab. The metal chip may be a flake consisting of the same material as a metal of the metal layer. The metal chip may be, for example, metal foil, a metal mesh, or the like. The metal chip may be, for example, aluminum foil, copper foil, SUS foil, or the like. The metal chip may be disposed on the metal layer and then welded to the lead tab, and thus the lead tab may be welded to a metal chip/metal layer stack or a metal chip/metal layer/base film stack. During welding, while the base film, the metal layer, and/or the metal chip are melted, the metal layer or a metal layer/metal chip stack may be electrically connected to the lead tab. A metal chip and/or a lead tab may be added onto a portion of the metal layer. A thickness of the base film may be, for example, in a range of 1 to 50 µm, 1.5 to 50 µm, 1.5 to 40 µm, or 1 to 30 µm. The base film may have a thickness within such a range, and thus a weight of an electrode assembly may be more effectively reduced. A melting point of the base film may be, for example, in a range of 100 to 300 °C, 100 to 250 °C, or 100 to 200 °C. The base film may have a melting point within such a range, and thus the base film may be melted and easily coupled to the lead tab in a process of welding the lead tab. In order to improve adhesive strength between the base film and the metal layer, surface treatment such as corona treatment may be performed on the base film. A thickness of the metal layer may be, for example, in a range of 0.01 to 3 µm, 0.1 to 3 µm, 0.1 to 2 µm, or 0.1 to 1 µm. The metal layer may have a thickness within such a range, and thus the stability of an electrode assembly may be secured while conductivity is maintained. A thickness of the metal chip may be, for example, in a range of 2 to 10 µm, 2 to 7 µm, or 4 to 6 µm. The metal chip may have a thickness within such a range, and thus the metal layer may be more easily connected to the lead tab. The cathode current collector 11 may have such a structure, and thus a weight of the cathode may be reduced, thereby improving the energy density of the cathode and the lithium secondary battery.

According to an embodiment, the cathode current collector 11 may include the MOF described above.

### [Cathode: Inactive member]

Referring to FIGS. 4 and 5, the cathode 10 may include the cathode current collector 11 and the cathode active material layer 12 disposed on one side of the cathode current collector 11. The inactive member 40 is disposed on one side of the cathode 10. Referring to FIG. 4, the inactive member 40 may be disposed on one side of each of the cathode active material layer 12 and the cathode current collector 11. Referring to FIG. 5, the inactive member 40 may be disposed on one side of the cathode active material layer 12 and may be disposed between the electrolyte layer 30 and the cathode current collector 11 opposite to the electrolyte layer 30. The inactive member 40 is not disposed on one side of the cathode current collector 11. The electrolyte layer 30 may be, for example, a solid electrolyte layer.

According to an embodiment, the inactive member 40 may include the MOF described above.

The inactive member 40 may be included to prevent cracks of the solid electrolyte layer 30 during manufacturing and/or charging and discharging of the lithium secondary battery 1, thereby improving the cycle characteristics of the lithium secondary battery 2. In the lithium secondary battery 1 that does not include the inactive member 40, nonuniform pressure is applied to the electrolyte layer 30 in contact with the cathode 10 during manufacturing and/or charging and discharging of the lithium secondary battery 1 to cause cracks in the electrolyte layer 30, and a lithium metal is grown through the cracks to increase the likelihood of the occurrence of a short circuit.

In the lithium secondary battery 1, a thickness of the inactive member 40 is greater than or equal to a thickness of the cathode active material layer 12. Alternatively, in the lithium secondary battery 1, the thickness of the inactive member 40 is substantially equal to a thickness of the cathode 10. The thickness of the inactive member 40 may be equal to the thickness of the cathode 10, and thus uniform pressure may be applied between the cathode 10 and the electrolyte layer 30, and the cathode 10 and the electrolyte layer 30 may be in sufficiently close contact with each other, thereby reducing interfacial resistance between the cathode 10 and the electrolyte layer 30. In addition, the electrolyte layer 30 may be sufficiently sintered during a process of pressing and manufacturing the lithium secondary battery 1, thereby reducing the internal resistance of the electrolyte layer 30 and the lithium secondary battery 1 including the same.

The inactive member 40 surrounds a side of the cathode 10 and is in contact with the electrolyte layer 30. The inactive member 40 may surround the side of the cathode 10 and may be in contact with the electrolyte layer 30, thereby effectively suppressing cracks of the electrolyte layer 30, which are caused in a portion of the electrolyte layer 30, which is not in contact with the cathode 20, by a pressure difference during a pressing process. The inactive member 40 surrounds the side of the cathode 10 and is separated from the anode 20, more specifically, a first anode active material layer 22. The inactive member 40 surrounds the side of the cathode 10, is in contact with the electrolyte layer 30, and is separated from the anode 20. Therefore, the likelihood of a short circuit occurring due to physical contact between the cathode 10 and the first anode active material layer 22 or the likelihood of a short circuit occurring due to the overcharging of lithium is suppressed. For example, the inactive member 40 is disposed on one side of the cathode active material layer 12 and simultaneously is disposed on one side of the cathode current collector 11, thereby more effectively suppressing the likelihood of a short circuit occurring due to contact between the cathode current collector 11 and the anode 20.

Referring to FIGS. 4 and 5, the inactive member 40 extends from one side of the cathode 10 to an end portion of the electrolyte layer 30. The inactive member 40 may extend to the end portion of the electrolyte layer 30 so that cracks occurring at the end portion of the electrolyte layer 30 may be suppressed. The end portion of the electrolyte layer 30 is an outermost portion in contact with a side of the electrolyte layer 30 to be described below. The inactive member 40 extends to the outermost portion in contact with the side of the electrolyte layer 30 to be described below. The inactive member 40 is separated from the anode 20 to be described below. The inactive member 40 extends to the end portion of the electrolyte layer 30 but is not in contact with the anode 20. For example, the inactive member 40 may fill a space extending from one side of the cathode 10 to the end portion of the electrolyte layer 30.

Referring FIGS. 4 and 5, a width of the inactive member 40 extending from one side of the cathode 10 to the end portion of the electrolyte layer 30 is, for example, in a range of 1 to 30 %, 1 to 25 %, 1 to 20 %, 1 to 15 %, 1 to 10 %, or 1 to 5 % of a width between one side of the cathode 10 and the other side opposite to the one side. When the width of the inactive member 40 is excessively large, the energy density of the lithium secondary battery 1 is reduced. When the width of the inactive member 40 is excessively small, an effect of arranging the inactive member 40 is insignificant.

An area of the cathode 10 may be smaller than an area of the electrolyte layer 30 in contact with the cathode 10. The inactive member 40 is disposed to surround the side of the cathode 10 to compensate for a difference in area between the cathode 10 and the electrolyte layer 30. The area of the inactive member 40 compensates for the difference between the area of the cathode 10 and the area of the electrolyte layer 30, thereby effectively preventing cracks of the electrolyte layer 30 caused by a pressure difference during a pressing process. For example, the sum of the area of the cathode 10 and the area of the inactive member 40 is equal to the area of the electrolyte layer 30. The electrolyte layer 30 may be, for example, a solid electrolyte layer.

The area of the cathode 10 is, for example, less than 100 %, 99 % or less, 98 % or less, 97 % or less, 96 % or less, or 95 % or less of the area of the electrolyte layer 30. The area of the cathode 10 is, for example, in a range of 50 % to less than 100 %, 50 % to 99 %, 55 % to 98 %, 60 % to 97 %, 70 % to 96 %, 80 % to 95 %, or 85 % to 95 % of the area of the electrolyte layer 30.

When the area of the cathode 10 is greater than or equal to the area of the electrolyte layer 30, a short circuit occurs due to physical contact between the cathode 10 and the first anode active material layer 22, or the likelihood of a short circuit occurring due to the overcharging of lithium increases. The area of the cathode 10 is, for example, equal to an area of the cathode active material layer 12. The area of the cathode 10 is, for example, equal to an area of the cathode current collector 11.

An area of the inactive member 40 is, for example, 50 % or less, 40 % or less, 30 % or less, 20 % or less, or 10 % or less of the area of the cathode 10. The area of the inactive member 40 is, for example, in a range of 1 % to 50 %, 5 % to 40 %, 5 % to 30 %, 5 % to 20 %, or 5 % to 15 % of the area of the cathode 10.

An area S1 of the cathode 10 is smaller than an area S4 of an anode current collector 21. The area S1 of the cathode 10 is, for example, less than 100 %, 99 % or less, 98 % or less, 97 % or less, 96 % or less, or 95 % or less of the area S4 of the anode current collector 21. The area S1 of the cathode 10 is, for example, in a range of 50 % to less than 100 %, 50 % to 99 %, 55 % to 98 %, 60 % to 97 %, 70 % to 96 %, 80 % to 95 %, or 85 % to 95 % of the area S4 of the anode current collector 21. The area S4 of the anode current collector 21 is, for example, equal to an area of the anode 20. The area S4 of the anode current collector 21 is, for example, equal to an area of the first anode active material layer 22.

In the present disclosure, "equal" area, length, width, thickness, and/or shape includes all cases of having "substantially equal" area, length, width, thickness, and/or shape, excluding a case in which areas, lengths, widths, thicknesses, and/or shapes are intentionally different from each other. "Equal" area, length, width, and/or thickness includes a range in which the unintended difference in area, length, width, and/or thickness between compared objects is, for example, less than 3 %, less than 2 %, less than 1 %, less than 0.5 %, or less than 0.1 %.

The thickness of the inactive member 40 is, for example, greater than a thickness of the first anode active material layer 22 to be described below. The thickness of the first anode active material layer 22 is, for example, 50 % or less, 40 % or less, 30 % or less, 20 % or less, or 10 % or less of the thickness of the inactive member 40. The thickness of the first anode active material layer 22 is, for example, in a range of 1 % to 50 %, 1 % to 40 %, 1 % to 30 %, 1 % to 20 %, or 1 % to 10 % of the thickness of the inactive member 40.

The inactive member 40 may be a gasket. By using the gasket as the inactive member 40, cracks of the electrolyte layer 30 caused by a pressure difference during a pressing process may be effectively suppressed. For example, the gasket may include a MOF.

The inactive member 40 has, for example, a single-layer structure. Alternatively, although not shown in the drawings, the inactive member 40 may have a multilayer structure. In the inactive member 40 having a multilayer structure, respective layers may have different compositions. The inactive member 40 having a multilayer structure may have, for example, a two-layer structure, a three-layer structure, a four-layer structure, or a five-layer structure. The inactive member 40 having a multilayer structure may include, for example, one or more adhesive layers and one or more support layers. For example, the adhesive layer effectively prevents separation between the cathode 10 and the electrolyte layer 30 due to a volume change of the cathode 10 which occurs during a charging and discharging process of the lithium secondary battery 10 and provides a binding force between the support layer and other layers to improve the film strength of the inactive member 40. The support layer provides a supporting force to the inactive member 40, prevents the nonuniformity of pressure applied to the electrolyte layer 30 during a pressing process or a charging and discharging process, and prevents the shape deformation of the lithium secondary battery 1 to be manufactured.

The inactive member 40 is, for example, a flame-retardant inactive member. The flame-retardant inactive member may provide flame retardancy to prevent the likelihood of thermal runaway and ignition of the lithium secondary battery 1. As a result, the safety of the lithium secondary battery 1 is further improved. The flame-retardant inactive member absorbs residual moisture in the lithium secondary battery 1, thereby preventing the deterioration of the lithium secondary battery 1 and improving the lifespan characteristics of the lithium secondary battery 1. For example, the flame-retardant inactive member may include the MOF described above.

The flame-retardant inactive member includes, for example, a matrix and a filler. The matrix includes, for example, a substrate and a reinforcing material. The matrix includes, for example, a fibrous substrate and a fibrous reinforcing material. The matrix may include the substrate to have elasticity. Therefore, the matrix may effectively accommodate a volume change of the lithium secondary battery 1 during charging and discharging and may be disposed at any one of various positions. The substrate included in the matrix includes, for example, a first fibrous material. By including the first fibrous material, the substrate may effectively accommodate a volume change of the cathode 10 which occurs during a charging and discharging process of the lithium secondary battery 1 and may effectively suppress the deformation of the inactive member 40 due to the volume change of the cathode 10. The first fibrous material is, for example, a material having an aspect ratio of 5 or more, 20 or more, or 50 or more. The first fibrous material is, for example, a material having an aspect ratio of 5 to 1,000, 20 to 1,000, or 50 to 1,000. The first fibrous material is, for example, an insulating material. The first fibrous material may be the insulating material, and thus a short circuit between the cathode 10 and the anode 20, which occur due to lithium dendrites or the like during charging and discharging of the lithium secondary battery 1, may be effectively prevented. The first fibrous material includes, for example, at least one selected from a pulp fiber, an insulating polymer fiber, and an ion-conductive polymer fiber. The matrix includes the reinforcing material, and thus the strength of the matrix is improved. Therefore, the matrix may prevent an excessive volume change of the lithium secondary battery 1 during charging and discharging and may prevent the deformation of the lithium secondary battery. The reinforcing material included in the matrix includes, for example, a second fibrous material. The reinforcing material may include the second fibrous material, and thus the strength of the matrix may more uniformly increase. The second fibrous material is, for example, a material having an aspect ratio of 3 or more, 5 or more, or 10 or more. The second fibrous material is, for example, a material having an aspect ratio of 3 to 100, 5 to 100, or 10 to 100. The second fibrous material is, for example, a flame-retardant material. The second fibrous material may be the flame-retardant material, and thus ignition due to thermal runaway occurring during a charging and discharging process of the lithium battery 1 or an external impact may be effectively suppressed. The second fibrous material is, for example, a glass fiber, a metal oxide fiber, or a ceramic fiber.

The flame-retardant inactive member includes a filler in addition to a matrix. The filler may be disposed in the matrix, on a surface of the matrix, or on both the interior and the surface. The filler includes, for example, an inorganic material. The filler included in the flame-retardant inactive member is, for example, a moisture getter. For example, the filler adsorbs moisture at a temperature of less than 100 °C to remove moisture remaining in the lithium secondary battery 1, thereby preventing the deterioration of the lithium secondary battery 1. In addition, when a temperature of the lithium secondary battery 1 increases to 150 °C or more due to thermal runaway occurring during a charging and discharging process of the lithium secondary battery 1 or an external impact, the filler may release the adsorbed moisture to effectively suppress ignition of the lithium secondary battery 1. That is, the filler is, for example, a flame retardant. The filler includes, for example, a metal hydroxide having moisture adsorption properties. The metal hydroxide included in the filler is, for example, Mg(OH)₂, Fe(OH)₃, Sb(OH)₃, Sn(OH)₄, Tl(OH)₃,

Zr(OH)₄, Al(OH)₃, or a combination thereof. A content of the filler included in the flame-retardant inactive member is, for example, in a range of 10 to 80 parts by weight, 20 to 80 parts by weight, 30 to 80 parts by weight, 40 to 80 parts by weight, 50 to 80 parts by weight, 60 to 80 parts by weight, or 65 to 80 parts by weight with respect to 100 parts by weight of the flame-retardant inactive member 4.

The flame-retardant inactive member may further include, for example, a binder. The binder may include, for example, a curable polymer or a non-curable polymer. The curable polymer is a polymer that is cured by heat and/or pressure. The curable polymer is, for example, a solid at room temperature. The flame-retardant inactive member 40 includes, for example, a thermally press-curable film and/or a cured product thereof. A thermally press-curable polymer is, for example, TSA-66 by Toray.

The flame-retardant inactive member may additionally include other materials in addition to the above-described substrate, reinforcing material, filler, and binder. The flame-retardant inactive member may further include, for example, at least one selected from paper, an insulating polymer, an ion-conductive polymer, an insulating inorganic material, an oxide-based solid electrolyte, and a sulfide-based solid electrolyte. The insulating polymer may be, for example, an olefin-based polymer such as PP or PE.

A density of the substrate or the reinforcing material included in the flame-retardant inactive member may be, for example, in a range of 10 % to 300 %, 10 % to 150 %, 10 % to 140 %, 10 % to 130 %, or 10 % to 120 % of a density of the composite cathode active material included in the cathode active material layer 12.

The inactive member 40 is a member that does not include an electrochemically active material, for example, an electrode active material. The electrode active material is a material that intercalates/deintercalates lithium. The inactive member 40 is a member consisting of a material used in the art other than an electrode active material.

### [Anode]

According to an embodiment, the anode 20 may include a lithiophilic material. For example, the lithiophilic material may be an anode material capable of forming an alloy or compound with lithium. For example, the anode 20 may include the lithiophilic material, and thus an alloy with lithium or a lithium metal may be precipitated on the anode 20 during charging of the lithium secondary battery.

Referring to FIGS. 1 to 5, the anode 20 includes the anode current collector 21 and the first anode active material layer 22 disposed on one side of the anode current collector.

### [Anode: Anode active material]

Referring to FIGS. 1 to 5, the anode 20 includes the first anode active material layer 22. The first anode active material layer 22 includes, for example, an anode active material and a binder.

The anode active material included in the first anode active material layer 22 may include a lithiophilic material. The anode active material included in the first anode active material layer 22 has, for example, a particle form. An average particle diameter of the anode active material having a particle form is, for example, 4 µm or less, 3 µm or less, 2 µm or less, 1 µm or less, 500 nm or less, 300 nm or less, or 100 nm or less. The average particle diameter of the anode active material having a particle form is, for example, in a range of 10 nm to 4 µm, 10 nm to 3 µm, 10 nm to 2 µm, 10 nm to 1 µm, 10 nm to 500 nm, 10 nm to 300 nm, or 10 nm to 100 nm. The anode active material may have an average particle diameter within such a range, and thus the reversible absorbing and/or desorbing of lithium may be easier during charging and discharging. The average particle diameter of the anode active material is, for example, a median diameter (D₅₀) measured by using a laser type particle size distribution meter.

For example, the lithiophilic material includes at least one selected from a carbon-based anode active material and a metal or metalloid anode active material.

The carbon-based anode active material includes, for example, amorphous carbon, crystalline carbon, porous carbon, or a combination thereof.

The carbon-based anode active material is, for example, amorphous carbon. Examples of the amorphous carbon may include carbon black (CB), acetylene black (AB), furnace black (FB), Ketjen black (KB), graphene, and the like, but one or more embodiments are not necessarily limited thereto. Any material may be used as long as the material is classified as amorphous carbon in the art. The amorphous carbon is carbon that has no crystallinity or very low crystallinity and is distinguished from crystalline carbon or graphite-based carbon.

The carbon-based anode active material may be, for example, porous carbon. A pore volume of the porous carbon is, for example, in a range of 0.1 cc/g to 10.0 cc/g, 0.5 cc/g to 5 cc/g, or 0.1 cc/g to 1 cc/g. An average pore diameter of the porous carbon is, for example, in a range of 1 nm to 50 nm, 1 nm to 30 nm, or 1 nm to 10 nm. A Brunauer-Emmett-Teller (BET) specific surface area of the porous carbon is, for example, in a range of 100 m²/g to 3,000 m²/g.

The metal or metalloid anode active material includes at least one selected from the group consisting of gold (Au), platinum (Pt), palladium (Pd), silicon (Si), silver (Ag), aluminum (Al), bismuth (Bi), tin (Sn), and zinc (Zn), but one or more embodiments are not necessarily limited thereto. Any material may be used as long as the material is used as a metal anode active material or a metalloid anode active material which forms an alloy or compound with lithium in the art. For example, nickel (Ni) does not form an alloy with lithium and thus is not a metal anode active material.

The first anode active material layer 22 includes one type of anode active material among such anode active materials or a mixture of a plurality of different anode active materials. For example, the first anode active material layer 22 includes only amorphous carbon or includes at least one selected from the group consisting of gold (Au), platinum (Pt), palladium (Pd), silicon (Si), silver (Ag), aluminum (Al), bismuth (Bi), tin (Sn), and zinc (Zn). Alternatively, the first anode active material layer 22 includes a mixture of amorphous carbon and at least one selected from the group consisting of gold (Au), platinum (Pt), palladium (Pd), silicon (Si), silver (Ag), aluminum (Al), bismuth (Bi), tin (Sn), and zinc (Zn). A mixing ratio of a mixture of amorphous carbon and gold or the like is a weight ratio that is, for example, in a range of 99:1 to 1:99, 10:1 to 1:2, 5:1 to 1:1, or 4:1 to 2:1, but one or more embodiments are not necessarily limited to such a range. The mixing ratio is selected according to the required characteristics of the lithium secondary battery 1. The anode active material has such a composition, and thus the cycle characteristics of the lithium secondary battery 1 are further improved.

The anode active material included in the first anode active material layer 22 includes, for example, a mixture of first particles consisting of amorphous carbon and second particles consisting of a metal or metalloid. Examples of the metal or metalloid include gold (Au), platinum (Pt), palladium (Pd), silicon (Si), silver (Ag), aluminum (Al), bismuth (Bi), tin (Sn), zinc (Zn), and the like. Alternatively, the metalloid is a semiconductor. A content of the second particles is in a range of 1 to 99 wt%, 1 to 60 wt%, 8 to 60 wt%, 10 to 50 wt%, 15 to 40 wt%, or 20 to 30 wt% with respect to the total weight of the mixture. The second particles have a content within such a range, and thus, for example, the cycle characteristics of the lithium secondary battery 1 are further improved.

Alternatively, the first anode active material layer 22 includes a composite anode active material. For example, the composite anode active material may include a lithiophilic material. For example, as a lithiophilic material, the composite anode active material may include a carbon-based support and a metal-based anode active material supported on the carbon-based support. The composite anode active material may have such a structure so that the localization of the metal-based anode active material in the first anode active material layer 22 may be prevented, and the uniform distribution thereof may be obtained. As a result, the cycle characteristics of the lithium secondary battery 1 including the first anode active material layer 22 are further improved.

As the lithiophilic material, the metal-based anode active material supported on the carbon-based support includes, for example, a metal, a metal oxide, a composite of a metal and a metal oxide, or a combination thereof. Examples of the metal include gold (Au), platinum (Pt), palladium (Pd), silicon (Si), silver (Ag), aluminum (Al), bismuth (Bi), tin (Sn), tellurium (Te), zinc (Zn), and the like. Examples of the metal oxide include gold (Au) oxide, platinum (Pt) oxide, palladium (Pd) oxide, silicon (Si) oxide, silver (Ag) oxide, aluminum (Al) oxide, bismuth (Bi) oxide, tin ( Sn) oxide, tellurium (Te) oxide, zinc (Zn) oxide, and the like. The metal oxide may include, for example, AuₓO_{y} (0<x≤2 and 0<y≤3), PtₓO_{y} (0<x≤1 and 0<y≤2), PdₓO_{y} (0<x≤1 and 0<y≤1), SiₓO_{y} (0<x≤1 and 0<y≤2), AgₓO_{y} (0<x≤2 and 0<y≤1), AlₓO_{y} (0<x≤2 and 0<y≤3), BiₓO_{y} (0<x≤2 and 0<y≤3), SnₓO_{y} (0<x≤1 and 0<y≤2), TeₓO_{y} (0<x≤1 and 0<y≤3), ZnₓO_{y} (0<x≤1 and 0<y≤1), or a combination thereof. The composite of a metal and a metal oxide may include, for example, a composite of Au and AuₓO_{y} (0<x≤2 and 0<y≤3), a composite of Pt and PtₓO_{y} (0<x≤1 and 0<y≤2), a composite of Pd and PdₓO_{y} (0<x≤1 and 0<y≤1), a composite of Si and SiₓO_{y} (0<x≤1 and 0<y≤2), a composite of Ag and AgₓO_{y} (0<x≤2 and 0<y≤1), a composite of Al and AlₓO_{y} (0<x≤2 and 0<y≤3), a composite of Bi and BiₓO_{y} (0<x≤2 and 0<y≤3), a composite of Sn and SnₓO_{y} (0<x≤1 and 0<y≤2), a composite of Te and TeₓO_{y} (0<x≤1 and 0<y≤3), a composite of Zn and ZnₓO_{y} (0<x≤1 and 0<y≤1), or a combination thereof.

According to an embodiment, as the lithiophilic material, the carbon-based support is, for example, amorphous carbon. The amorphous carbon includes, for example, CB, AB, FB, KB, graphene, activated carbon, CNFs, CNTs, and the like, but one or more embodiments are not necessarily limited thereto. Any material may be used as long as the material is classified as amorphous carbon in the art. The amorphous carbon is carbon that has no crystallinity or very low crystallinity and is distinguished from crystalline carbon or graphite-based carbon. A carbonaceous material is, for example, a carbon-based anode active material.

According to an embodiment, the composite anode active material may have, for example, a particle form. A particle diameter of the composite anode active material having a particle form is, for example, in a range of 10 nm to 4 µm, 10 nm to 1 µm, 10 nm to 500 nm, 10 nm to 200 nm, or 10 nm to 100 nm. The composite anode active material may have a particle diameter within such a range, and thus the reversible absorbing and/or desorbing of lithium may be easier during charging and discharging. The metal-based anode active material supported on the carbon-based support may have, for example, a particle form. A particle diameter of the metal-based anode active material may be, for example, in a range of 1 nm to 200 nm, 1 nm to 150 nm, 5 nm to 100 nm, or 10 nm to 50 nm. The carbon-based support may have, for example, a particle form. A particle diameter of the carbon-based support may be, for example, in a range of 10 nm to 2 µm, 10 nm to 1 µm, 10 nm to 500 nm, 10 nm to 200 nm, or 10 nm to 100 nm. The carbon-based support may have a particle diameter within such a range and thus may be more uniformly disposed in the first anode active material layer. The carbon-based support may include, for example, nanoparticles having a particle diameter of 500 nm or less. Each of the particle diameter of the composite anode active material, the particle diameter of the metal-based anode active material, and the particle diameter of the carbon-based support is, for example, an average particle diameter. The average particle diameter is, for example, a median diameter (D₅₀) measured by using a laser type particle size distribution meter. Alternatively, the average particle size may be determined automatically by using software, for example, from an electron microscope image or may be manually determined according to a manual.

### [Anode: Binder]

The binder included in the first anode active material layer 22 is, for example, SBR, polytetrafluoroethylene, polyvinylidene fluoride, PE, a vinylidene fluoride/hexafluoropropylene copolymer, polyacrylonitrile, polymethyl methacrylate, or the like, but one or more embodiments are not necessarily limited thereto. Any material may be used as long as the material is used as a binder in the art. The binder may be provided as a single binder or a plurality of different binders.

The first anode active material layer 22 includes the binder and thus is stabilized on the anode current collector 21. In addition, cracks of the first anode active material layer 22 are suppressed despite a volume change and/or a relative position change of the first anode active material layer 22 during a charging and discharging process. For example, when the first anode active material layer 22 does not include a binder, the first anode active material layer 22 may be easily separated from the anode current collector 21. At a portion of the anode current collector 21 exposed due to the separation of the first anode active material layer 22 from the anode current collector 21, the anode current collector 21 is in contact with the electrolyte layer 30, which causes an increase in the likelihood of the occurrence of a short circuit. The first anode active material layer 22 is formed, for example, by applying a slurry, in which a material constituting the first anode active material layer 22 is dispersed, onto the anode current collector 21 and drying the slurry. The first anode active material layer 22 may include the binder, and thus an anode active material may be stably distributed in the slurry. For example, when the slurry is applied onto the anode current collector 21 through screen printing, the clogging of a screen (for example, clogging by aggregates of an anode active material) may be suppressed.

### [Anode: Other additives]

The first anode active material layer 22 may further include additives used in the lithium secondary battery 1 according to a related art, such as a filler, a coating agent, a dispersant, and an conductive adjuvant.

According to other embodiments, the first anode active material layer 22 may further include the above-described MOF.

### [Anode: Solid electrolyte]

The first anode active material layer 22 may further include a solid electrolyte. The solid electrolyte may be, for example, a material selected from solid electrolytes included in the electrolyte layer 30. The solid electrolyte included in the first anode active material layer 22 may serve as a reaction point at which the formation of a lithium metal starts in the first anode active material layer 22, may serve as a space in which the formed lithium metal is stored, or may serve as a path for transferring lithium ions. The solid electrolyte may be omitted.

In the first anode active material layer 22, for example, a content of the solid electrolyte may be high in a region adjacent to the electrolyte layer 30 and may be low in a region adjacent to the anode current collector 21. The solid electrolyte in the first anode active material layer 22 may have, for example, a concentration gradient in which a concentration decreases from the region adjacent to the electrolyte layer 30 to the region adjacent to the anode current collector 21.

### [Anode: First anode active material layer]

A ratio B/A of initial charge capacity B of the first anode active material layer 22 to initial charge capacity A of the cathode active material layer 12 is in a range of 0.005 to 0.45. The initial charge capacity of the cathode active material layer 12 is determined at a maximum charging voltage with respect to Li/Li+ from a 1st open circuit voltage. The initial charge capacity of the first anode active material layer 22 is determined at 0.01 V with respect to Li/Li+ from a 2nd open circuit voltage.

The maximum charging voltage is determined according to types of composite cathode active materials. The maximum charging voltage may be, for example, 1.5 V, 2.0 V, 2.5 V, 3.0 V, 3.5 V, 4.0 V, 4.2 V, or 4.3 V. For example, a maximum charging voltage of Li₂S or a Li₂S composite may be 2.5 V with respect to Li/Li+. For example, the maximum charging voltage of Li₂S or the Li₂S composite may be 3.0 V with respect to Li/Li+. The ratio B/A of the initial charge capacity B of the first anode active material layer 22 to the initial charge capacity A of the cathode active material layer is, for example, in a range of 0.01 to 0.3, 0.01 to 0.2, or 0.05 to 0.1. The initial charge capacity (mAh) of the cathode active material layer 12 is obtained by multiplying a charge specific capacity (mAh/g) of a composite cathode active material by a mass (g) of the composite cathode active material in the cathode active material layer 12. When various types of composite cathode active materials are used, a value of specific charge capacity×mass is calculated for each composite cathode active material, and the sum of the values is the initial charge capacity of the cathode active material layer 12. The initial charge capacity of the first anode active material layer 22 is also calculated in the same manner. The initial charge capacity of the first anode active material layer 22 is obtained by multiplying a charge specific capacity (mAh/g) of an anode active material by a mass of the anode active material in the first anode active material layer 22. When various types of anode active materials are used, a value of specific charge capacity×mass is calculated for each anode active material, and the sum of the values is the initial charge capacity of the first anode active material layer 22. The specific charge capacity of each of the composite cathode active material and the anode active material may be measured by using a solid half-cell that uses a lithium metal as a counter electrode. The initial charge capacity of each of the cathode active material layer 12 and the first anode active material layer 22 may be directly measured at a constant current density, for example, 0.1 mA/cm2 by using an all-solid-state half-cell. The measurement may be performed on a cathode at an operating voltage from a 1st open circuit voltage (OCV) to a maximum charging voltage, for example, 3.0 V (vs. Li/Li+). The measurement may be performed on an anode at an operating voltage from a 2nd OCV to 0.01 V for the anode, for example, a lithium metal. For example, an all-solid-state half-cell including a cathode active material layer may be charged at a constant current of 0.1 mA/cm2 from a 1st OCV to 3.0 V, and an all-solid-state half-cell including a first anode active material layer may be charged at a constant current of 0.1 mA/cm2 from a 2nd OCV to 0.01 V. A current density during constant current charging may be, for example, 0.2 mA/cm2 or 0.5 mA/cm2. The all-solid-state half-cell including the cathode active material layer may be charged, for example, from a 1st OCV to 2.5 V, 2.0 V, 3.5 V, or 4.0 V. A maximum charging voltage of the cathode active material layer may be determined by a maximum voltage of a battery that satisfies the safety conditions according to JIS C 8712:2015 of the Japanese Standards Association.

When the initial charge capacity of the first anode active material layer 22 is excessively low, the first anode active material layer 22 becomes very thin, and thus, during a repeated charging and discharging process, lithium dendrites formed between the first anode active material layer 22 and the anode current collector 21 collapse the first anode active material layer 22, which makes it difficult to improve the cycle characteristics of the lithium secondary battery 1. When the charge capacity of the first anode active material layer 22 excessively increases, the energy density of the lithium secondary battery 1 decreases, and the internal resistance of the lithium secondary battery 1 due to the first anode active material layer 22 increases, which makes it difficult to improve the cycle characteristics of the lithium secondary battery 1.

The thickness of the first anode active material layer 22 is, for example, 50 % or less, 40 % or less, 30 % or less, 20 % or less, 10 % or less, or 5 % or less of the thickness of the cathode active material layer 12. The thickness of the first anode active material layer 22 is, for example, in a range of 1 to 50 %, 1 to 40 %, 1 to 30 %, 1 to 20 %, 1 to 10 %, or 1 to 5 % of the thickness of the cathode active material layer 12. The thickness of the first anode active material layer 22 is, for example, in a range of 1 µm to 20 µm, 2 µm to 15 µm, or 3 µm to 10 µm. When the first anode active material layer 22 is excessively thin, lithium dendrites formed between the first anode active material layer 22 and the anode current collector 21 collapse the first anode active material layer 22, which makes it difficult to improve the cycle characteristics of the lithium secondary battery 1. When the thickness of the first anode active material layer 22 excessively increases, the energy density of the lithium secondary battery 1 decreases, and the internal resistance of the lithium secondary battery 1 due to the first anode active material layer 22 increases, which makes it difficult to improve the cycle characteristics of the lithium secondary battery 1. When the thickness of the first anode active material layer 22 decreases, for example, the initial charge capacity of the first anode active material layer 22 also decreases.

### [Anode: Second anode active material layer]

Referring to FIG. 3, the lithium secondary battery 1 further includes a second anode active material layer 24 which, after charging, is disposed, for example, between the anode current collector 21 and the first anode active material layer 22. The second anode active material layer 24 is a metal layer including lithium or a lithium alloy. The metal layer includes lithium or a lithium alloy. Therefore, the second anode active material layer 24 is the metal layer including lithium and thus serves, for example, as a lithium reservoir. Examples of the lithium alloy include a Li-Al alloy, a Li-Sn alloy, a Li-In alloy, a Li-Ag alloy, a Li-Au alloy, a Li-Zn alloy, a Li-Ge alloy, a Li-Si alloy, and the like, but one or more embodiments are not limited thereto. Any material may be used as long as the material is used as a lithium alloy in the art. The second anode active material layer 24 may consist of one of such alloys or lithium or may consist of various types of alloys. The second anode active material layer 24 is, for example, a plated layer. For example, the second anode active material layer 24 is precipitated between the first anode active material layer 22 and the anode current collector 21 during a charging process of the lithium secondary battery 1.

A thickness of the second anode active material layer 24 is not particularly limited, but is, for example, in a range of 1 µm to 500 µm, 1 µm to 200 µm, 1 µm to 150 µm, 1 µm to 100 µm, or 1 µm to 50 µm. When the second anode active material layer 24 is excessively thin, it is difficult for the second anode active material layer 24 to serve as a lithium reservoir. When the second anode active material layer 24 is excessively thick, the mass and volume of the lithium secondary battery 1 may be increased, and the cycle characteristics of the lithium secondary battery 1 may instead be deteriorated.

Alternatively, in the lithium secondary battery 1, for example, before assembly of the lithium secondary battery 1, the second anode active material layer 24 may be disposed between the anode current collector 21 and the first anode active material layer 22. When the second anode active material layer 24 is disposed between the anode current collector 21 and the first anode active material layer 22 before the assembly of the lithium secondary battery 1, the second anode active material layer 24 is the metal layer including lithium and thus serves as a lithium reservoir. For example, before the assembly of the lithium secondary battery 1, lithium foil may be disposed between the anode current collector 21 and the first anode active material layer 22.

When the second anode active material layer 24 is precipitated by the lithium secondary battery 1 being charged after being assembled, the lithium secondary battery 1 does not include the second anode active material layer 24 when the lithium secondary battery 1 is assembled, and thus the energy density of the lithium secondary battery 1 increases. During charging of the lithium secondary battery 1, the first anode active material layer 22 is charged beyond a charge capacity thereof. That is, the first anode active material layer 22 is overcharged. At the beginning of charging, lithium is absorbed in the first anode active material layer 22. The anode active material included in the first anode active material layer 22 forms an alloy or compound with lithium ions that move from the cathode 10. When charging is performed beyond a capacity of the first anode active material layer 22, for example, lithium is precipitated on a rear side of the first anode active material layer 22, for example, between the anode current collector 21 and the first anode active material layer 22, and a metal layer corresponding to the second anode active material layer 24 is formed by the plated lithium. The second anode active material layer 24 is a metal layer mainly consisting of lithium (for example, metallic lithium). Such a result is obtained, for example, because the anode active material included in the first anode active material layer 22 includes a material that forms an alloy or compound with lithium. During discharging, lithium in the first anode active material layer 22 and the second anode active material layer 24, for example, lithium in the metal layer, is ionized to move toward the cathode 10. Therefore, it is possible to use lithium as an anode active material in the lithium secondary battery 1. In addition, since the first anode active material layer 22 covers the second anode active material layer 24, the first anode active material layer 22 serves as a protective layer for the second anode active material layer 24, for example, the metal layer, and simultaneously serves to suppress the precipitation growth of lithium dendrites. Therefore, a short circuit and a reduction in capacity of the lithium secondary battery 1 are suppressed, thereby improving the cycle characteristics of the lithium secondary battery 1. In addition, when the second anode active material layer 24 is disposed by the lithium secondary battery 1 being charged after being assembled, the anode 20, for example, the anode current collector 21, the first anode active material layer 22, and a region therebetween, are Li-free regions that do not include lithium (Li) in an initial state of the lithium secondary battery 1 or in a state after full discharging thereof.

### [Anode: Anode current collector]

The anode current collector 21 consists of, for example, a material that does not react with lithium, that is, a material that does not form both an alloy and a compound with lithium. Examples of the material constituting the anode current collector 21 include copper (Cu), stainless steel, titanium (Ti), iron (Fe), cobalt (Co), and nickel (Ni), but one or more embodiments are not necessarily limited thereto. Any material may be used as long as the material is used as an electrode current collector in the art. The anode current collector 21 may consist of one type of the above-described metals or an alloy or coating material of two or more types of metals. The anode current collector 21 is, for example, in the form of a plate or foil.

Referring to FIG. 2, the lithium battery 1 may further include a thin film 23, which includes an element capable of forming an alloy with lithium, on one side of the anode current collector 21. The thin film 23 is disposed between the anode current collector 21 and the first anode active material layer 22. The thin film 23 includes, for example, an element capable of forming an alloy with lithium. Examples of the element capable of forming an alloy with lithium include gold, silver, zinc, tin, indium, silicon, aluminum, bismuth, and the like, but one or more embodiments are not necessarily limited thereto. Any material may be used as long as the material may form an alloy with lithium in the art. The thin film 23 consists of one of such metals or an alloy of various types of metals. The thin film 23 may be disposed on one side of the anode current collector 21 so that, for example, a precipitated form of the second anode active material layer 24 precipitated between the thin film 23 and the first anode active material layer 22 may be further planarized, and the cycle characteristics of the lithium secondary battery 1 may be further improved.

A thickness of the thin film 23 is, for example, in a range of 1 nm to 800 nm, 10 nm to 700 nm, 50 nm to 600 nm, or 100 nm to 500 nm. When the thickness of the thin film 23 is less than 1 nm, it may be difficult for the thin film 23 to function. When the tin film 23 is excessively thick, the thin film 23 itself may adsorb lithium, and thus an amount of lithium precipitated at the anode 20 may decrease, resulting in a decrease in energy density of the lithium secondary battery 1 and a decrease in cycle characteristics of the lithium secondary battery 1. The thin film 23 may be disposed on the anode current collector 21 through, for example, vacuum deposition, sputtering, plating, or the like, but one or more embodiments are not necessarily limited to such a method. Any method may be used as long as the method may form the thin film 23 in the art.

Although not shown in the drawings, the anode current collector 21 may include, for example, a base film and a metal layer disposed on one side or both sides of the base film. The base film may include, for example, a polymer. The polymer may be, for example, a thermoplastic polymer. The polymer may include, for example, PET, PE, PP, PBT, PI, or a combination thereof. The polymer may be an insulating polymer. The base film may include an insulating thermoplastic polymer, and thus when a short circuit occurs, the base film may soften or liquefy to interrupt the operation of a battery, thereby suppressing a rapid increase in current. The metal layer may include, for example, copper (Cu), stainless steel, titanium (Ti), iron (Fe), cobalt (Co), nickel (Ni), or an alloy thereof. The anode current collector 21 may additionally include a metal chip and/or a lead tab. The base film, metal layer, metal chip, and lead tab of the anode current collector 21 are defined as for the above-described cathode current collector 11. The anode current collector 21 may have such a structure, and thus a weight of an anode may be reduced, thereby improving the energy density of the anode and a lithium secondary battery.

### [Electrolyte layer]

### [Electrolyte layer: Electrolyte]

Referring to FIGS. 1 to 5, the electrolyte layer 30 includes an electrolyte disposed between the cathode 10 and the anode 20. The electrolyte may include, for example, a solid electrolyte, a gel electrolyte, or a combination thereof.

The solid electrolyte may include, for example, a sulfide-based solid electrolyte, an oxide-based solid electrolyte, a polymer solid electrolyte, or a combination thereof.

The solid electrolyte is, for example, a sulfide-based solid electrolyte. The sulfide-based solid electrolyte includes, for example, at least one selected from Li₂S-P₂S₅, Li₂S-P₂S₅-LiX (X is a halogen element), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m and n are each a positive number and Z is one of Ge, Zn, and Ga), Li₂S-GeS₂, Li₂S-SiS₂-Li₃PO₄, Li₂S-SiS₂-LiₚMO_{q} (p and q are each a positive number and M is one of P, Si, Ge, B, Al, Ga, and In) Li₇₋ₓPS₆₋ₓClₓ (0≤x≤2), Li₇₋ₓPS₆₋ₓBrₓ (0≤x≤2), and Li₇₋ₓPS₆₋ₓIₓ (0≤x≤2). For example, the sulfide-based solid electrolyte is prepared by treating a starting material such as Li₂S or P₂S₅ through melt quenching or mechanical milling. In addition, after such treating, heat treatment may be performed. A solid electrolyte may be in an amorphous state, a crystalline state, or a mixture state thereof. In addition, the solid electrolyte may be, for example, a material that includes at least sulfur (S), phosphorus (P), and lithium (Li) as constituent elements among the above-described materials of the sulfide-based solid electrolyte. For example, the solid electrolyte may be a material including Li₂S-P₂S₅. When a material including Li₂S-P₂S₅ is used as a sulfide-based solid electrolyte material for forming a solid electrolyte, a mixing molar ratio of Li₂S to P₂S₅, for example, Li₂S:P₂S₅, is in a range of 20:80 to 90:10, 25:75 to 90:10, 30:70 to 70:30, or 40:60 to 60:40.

The sulfide-based solid electrolyte may include, for example, an argyrodite-type solid electrolyte represented by Formula 1 below:

Formula 1 Li⁺₁₂₋ₙ₋ₓAⁿ⁺X²⁻₆₋ₓY⁻_{x.}

In the above formula, A is P, As, Ge, Ga, Sb, Si, Sn, Al, In, Ti, V, Nb, or Ta, X is S, Se, or Te, Y is Cl, Br, I, F, CN, OCN, SCN, or N₃, 1≤n≤5, and 0≤x≤2. The sulfide-based solid electrolyte may be, for example, an argyrodite-type compound including at least one selected from Li₇₋ₓPS₆₋ₓClₓ (0≤x≤2), Li₇₋ₓPS₆₋ₓBrₓ (0≤x≤2), and Li₇₋ₓPS₆₋ₓIₓ (0≤x≤2). The sulfide-based solid electrolyte may be, for example, an argyrodite-type compound including at least one selected from Li₆PS₅Cl, Li₆PS₅Br, and Li₆PS₅I.

The argyrodite-type solid electrolyte may have a density of 1.5 g/cc to 2.0 g/cc. The argyrodite-type solid electrolyte may have a density of 1.5 g/cc or more so that the internal resistance of the lithium secondary battery may be reduced, and Li may be effectively suppressed from penetrating the electrolyte layer.

The oxide-based solid electrolyte may include, for example, Li_{1+x+y}AlₓTi₂₋ₓSi_{y}P_{3-y}O₁₂ (0<x<2 and 0≤y<3), BaTiO₃, Pb(Zr,Ti)O₃(PZT), Pb₁₋ₓLaₓZr_{1-y} Ti_{y}O₃(PLZT) (0≤x<1 and 0≤y<1), PB(Mg₃Nb_{2/3})O₃-PbTiO₃(PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃ (0<x<2 and 0<y<3), LiₓAl_{y}Ti_{z}(PO₄)₃ (0<x<2, 0<y<1, and 0<z<3), Li_{1+x+y}(Al, Ga)ₓ(Ti, Ge)₂₋ₓSi_{y}P_{3-y}O₁₂ (0≤x≤1 and 0≤y≤1), LiₓLa_{y}TiO₃ (0<x<2 and 0<y<3), Li₂O, LiOH, Li₂CO₃, LiAlO₂, Li₂O-Al₂O₃-SiO₂-P₂O₅-TiO₂-GeO₂, Li₃₊ₓLa₃M₂O₁₂ (M=Te, Nb, or Zr and 0≤x≤10), or a combination thereof. The oxide-based solid electrolyte is prepared, for example, through sintering or the like.

The oxide-based solid electrolyte is, for example, a garnet-type solid electrode selected from Li₇La₃Zr₂O₁₂ (LLZO) and Li₃₊ₓLa₃Zr₂₋ₐMₐO₁₂ (LLZO doped with M) (M=Ga, W, Nb, Ta, or Al, 0<a<2, and 0≤x≤10).

For example, the polymer solid electrolyte may include a mixture of a lithium salt and a polymer or may include a polymer having an ion-conductive functional group. The polymer solid electrolyte may be, for example, a polymer electrolyte that is in a solid state at a temperature of 25 °C and a pressure of 1 atm. The polymer solid electrolyte may not include, for example, a liquid. The polymer solid electrolyte may include a polymer, and the polymer may include, for example, polyethylene oxide (PEO), polyvinylidene fluoride (PVDF), vinylidene fluoride-hexafluoropropylene (PVDF-HFP), polyethylene oxide (PEO), a poly(styrene-b-ethylene oxide) block copolymer (PS-PEO), poly(styrene-butadiene), poly(styrene-isoprene-styrene), a poly(styrene-b-divinylbenzene) block copolymer, a poly(styrene-ethylene oxide-styrene) block copolymer, polystyrene sulfonate (PSS), polyvinyl fluoride (PVF), poly(methylmethacrylate) (PMMA), polyethylene glycol (PEG), polyacrylonitrile (PAN), polytetrafluoroethylene (PTFE), polyethylenedioxythiophene (PEDOT), polypyrrole (PPY), polyacrylonitrile (PAN), polyaniline, poly acetylene, NAFION^{™}, AQUIVION^{®}, FLEMION^{®}, GORE^{™}, ACIPLEX^{™}, MORGANE^{®}-ADP, sulfonated poly(ether ether ketone) (SPEEK), sulfonated poly(arylene ether ketone ketone sulfone) (SPAEKKS), sulfonated poly(aryl ether ketone (SPAEK), poly[bis(benzimidazobenzisoquinolinones)] (SPBIBI), poly(styrene sulfonate) (PSS), lithium 9,10-diphenylanthracene-2-sulfonate (DPASLi+), or a combination thereof, but one or more embodiments are not limited thereto. Any material may be used as long as the material is used in a polymer electrolyte in the art. As the lithium salt, any material may be used as long as the material may be used as a lithium salt in the art. The lithium salt includes, for example, LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂) (x and y are each a natural number from 1 to 20), LiCl, LiI, or a mixture thereof. The polymer included in the polymer solid electrolyte may be, for example, a compound including 10 or more, 20 or more, 50 or more, or 100 or more repeating units. A weight average molecular weight of the polymer included in the polymer solid electrolyte may be, for example, 1,000 Dalton or more, 10,000 Dalton or more, 100,000 Dalton or more, or 1,000,000 Dalton or more.

The gel electrolyte is, for example, a polymer gel electrolyte. The gel electrolyte may have a gel state without including, for example, a polymer.

The polymer gel electrolyte may include, for example, a liquid electrolyte and a polymer or may include an organic solvent and a polymer having an ion-conductive functional group. The polymer gel electrolyte may be, for example, a polymer electrolyte that is in a gel state at a temperature of 25 °C and a pressure of 1 atm. The polymer gel electrolyte may have, for example, a gel state without including a liquid. The liquid electrolyte used in the polymer gel electrolyte may include, for example, a mixture of an ionic liquid, a lithium salt, and an organic solvent; a mixture of a lithium salt and an organic solvent; a mixture of an ionic liquid and an organic solvent; or a mixture of a lithium salt, an ionic liquid, and an organic solvent. The polymer used in the polymer gel electrolyte may be selected from polymers used in a solid polymer electrolyte. The organic solvent may be selected from organic solvents used in a liquid electrolyte. The lithium salt may be selected from lithium salts used in a polymer solid electrolyte. The ionic liquid refers to a salt in a liquid state at room temperature or a room-temperature molten salt that has a melting point at room temperature or less and consists of only ions. The ionic liquid may include, for example, at least one of compounds including a) one cation selected from an ammonium-based cation, a pyrrolidinium-based cation, pyridinium-based cation, a pyrimidinium-based cation, an imidazolium-based cation, a piperidinium-based cation, a pyrazolium-based cation, an oxazolium-based cation, a pyridazinium-base cation, a phosphonium-based cation, a sulfonium-based cation, a triazol-based cation, and a mixture thereof, and b) at least one anion selected from BF₄⁻, PF₆⁻, AsF₆⁻, SbF₆⁻, AlCl₄⁻, HSO₄⁻, ClO₄⁻, CH₃SO₃⁻, CF₃CO₂⁻, Cl⁻, Br⁻, I⁻, SO₄⁻, CF₃SO₃⁻, (FSO₂)₂N⁻, (C₂F₅SO₂)₂N⁻, (C₂F₅SO₂)(CF₃SO₂)N⁻, and (CF₃SO₂)₂N⁻. The polymer solid electrolyte may be impregnated, for example, with a liquid electrolyte in a secondary battery to form a polymer gel electrolyte. The polymer gel electrolyte may further include inorganic particles. The polymer included in the polymer gel electrolyte may be, for example, a compound including 10 or more, 20 or more, 50 or more, or 100 or more repeating units. A weight average molecular weight of the polymer included in the polymer gel electrolyte may be, for example, 500 Dalton or more, 1,000 Dalton or more, 10,000 Dalton or more, 100,000 Dalton or more, or 1,000,000 Dalton or more.

### [Electrolyte layer: Binder]

The electrolyte layer 30 may include, for example, a binder. The binder included in the electrolyte layer 30 may include, for example, SBR, polytetrafluoroethylene, PVDF, PE, or the like, but one or more embodiments are not limited thereto. Any material used as long as the material is used as a binder in the art. The binder of the electrolyte layer 30 may be the same as or different from the binder included in the cathode active material layer 12 and the anode active material layer 22. The binder may be omitted.

A content of the binder included in the electrolyte layer 30 is in a range of 0.1 to 10 wt%, 0.1 to 5 wt%, 0.1 to 3 wt%, 0.1 to 1 wt%, 0 to 0.5 wt%, or 0 to 0.1 wt% with respect to the total weight of the electrolyte layer 30.

### [Electrolyte layer: MOF]

According to an embodiment, the electrolyte layer 30 may include the MOF described above.

A content of the MOF in the electrolyte layer 30 is in a range of 0.1 to 50 parts by weight, for example, 0.1 to 20 parts by weight, for example, 1 to 10 parts by weight, or for example, 1 to 5 parts by weight, with respect to 100 parts by weight of the electrolyte layer 30. When the content of the MOF within the electrolyte layer 30 is within such a range, hydrogen sulfide generated in the lithium secondary battery may be effectively captured inside the MOF, thereby preventing problems caused by hydrogen sulfide generation in advance.

### [Method of preparing MOF]

By using a MOF composition including a metal ion precursor, an organic ligand precursor, and a solvent, a MOF may be prepared through hydrothermal synthesis, synthesis using microwaves or ultrasound waves, or electrochemical synthesis. In the composition, the organic ligand precursor and the metal ion precursor may be used in stoichiometric amounts.

The metal ion precursor includes titanium isopropoxide, titanium ethoxide, titanium butoxide, aluminum nitrate, or the like, and the organic ligand precursor includes a 1,4-benzenedicarboxylic acid, a 1,3,5-benzenetricarboxylic acid, a biphenyldicarboxylic acid, a triphenyldicarboxylic acid, or the like. The solvent may include ethanol, N,N-dimethylformamide, tetrahydrofuran, methyl ethyl ketone, acetonitrile, methylene chloride, or a mixture thereof. A content of the solvent is in a range of 100 parts by weight to 3,000 parts by weight with respect to 100 parts by weight of the MOF.

In order to obtain a MOF having a uniform size represented by Condition 1, during preparation of the MOF composition, the organic ligand precursor is used in an amount exceeding a stoichiometric amount relative to a content of the metal ion precursor. For example, the organic ligand precursor may be used in an amount of 1.3 mole to 100 mole, for example, 1.5 mole to 50 mole, or specifically 1.3 mole to 20 mole, with respect to 1 mole of the metal ion precursor. When the organic ligand precursor is used within such a range, the MOF may be uniformly dispersed in an ion-conductive polymer matrix for forming a polymer electrolyte, and thus a polymer electrolyte with excellent ionic conductivity may be obtained without deterioration in the mechanical properties of the polymer electrolyte.

According to an embodiment, the above-described MOF may be obtained by heat-treating the above-described MOF composition at a temperature of 50 °C to 500 °C and performing a work-up process. Here, heat treatment conditions are not limited to such conditions.

If necessary, a reaction product obtained through such a process may be additionally heat-treated at a temperature of 100 °C to 1,200 °C.

The MOF is not limited to a specific form and may also be provided, for example, in the form of powder, thin film, membrane, pellet, slurry, paste, paint, bead, honeycomb, mesh, fiber, corrugated sheet, rotor, or the like.

In the cathode active material layer according to an embodiment, the cathode active material layer being supported on a MOF may be confirmed through X-ray analysis, thermogravimetric analysis, or the like of the cathode active material layer. Since the MOF has a metal oxide form in which pores are regularly arranged, as an XRD analysis result, a main peak appears at a low angle of 10 degrees or less, for example, 5 degrees or less, or for example, 3 degrees or less. The main peak refers to a diffraction characteristic due to a structure in which pores are regularly arranged. The presence and content of the MOF in the cathode active material layer may be confirmed through thermogravimetric analysis. A cross-section of a sample may be obtained through a focused ion beam (FIB), and the presence of the MOF having a nanosize may be confirmed through elemental analysis.

The present inventive concept will be described in more detail through the following Examples and Comparative Examples. However, Examples are for illustrative purposes only, and the scope of the present inventive concept is not limited by Examples.

### Preparation Example 1: Preparation of MOF (Ti₈O₈(OH)₄{O₂C-C₆H₄-CO₂}₆) (Ti-MOF)

Titanium isopropoxide and a 1,4-benzene dicarboxylic acid were mixed in a mixed solvent of methanol and N,N-dimethylformamide having a volume ratio of 9:1 to obtain a mixture. In the mixture, contents of the titanium isopropoxide and the 1,4-benzene dicarboxylic acid were stoichiometrically controlled to obtain an object Ti₈O₈(OH)₄{O₂C-C₆H₄-CO₂}₆. The total content of the mixed solvent was adjusted to about 150 times a weight of the titanium isopropoxide.

The mixture was heat-treated at a temperature of about 150 °C for 24 hours.

After a reaction was completed, an obtained reaction product was cooled to room temperature (20 °C to 25 °C). Then, the cooled result was cleaned by using each of methanol and N, N-dimethylformamide. The result subjected to such a cleaning process was dried at a temperature of about 120 °C for 24 hours to prepare Ti₈O₈(OH)₄{O₂C-C₆H₄-CO₂}₆) (hereinafter referred to as Ti-MOF).

### Evaluation Example 1: Dynamic laser scattering analysis

A diameter distribution of Ti-MOF primary particles prepared according to Preparation Example 1 was observed by using dynamic laser scattering (DLS). Results thereof are shown in Table 1 below. A DLS device used during the above observation was LA-950 manufactured by HORIBA, Ltd.

**[Table 1]**

| Classification | Average particle diameter µ (µm) | Standard deviation (σ) | F(σ2/µ) |
|---|---|---|---|
| Preparation Example 1 | 0.12634 | 0.0344 | 0.12204 |

In Table 1, F(σ2/µ) is a factor representing a diameter distribution of primary particles in a MOF. σ2 denotes a variance of the primary particles of the MOF. The variance corresponds to a value equivalent to a square value of a standard deviation of an average particle diameter of the primary particles in the MOF, and µ denotes an average particle diameter of the primary particles in the MOF.

Referring to Table 1, the factor F representing the diameter distribution of the primary particles in the MOF according to Preparation Example 1 has a value less than 1.0.

For example, through SEM and DLS analysis results, it was confirmed that a Ti-based nano-MOF with an average size of about 120 nm and a uniform shape was synthesized.

### Evaluation Example 2: Analysis of pore characteristics (nitrogen adsorption/desorption curve)

The MOF according to Preparation Example 1 was degassed under vacuum at a temperature of 150 °C for 24 hours, and then a nitrogen adsorption experiment was performed. In the nitrogen adsorption experiment, nitrogen was adsorbed and desorbed to and from a powder of the MOF, a specific surface area and a pore volume of the MOF were calculated through a difference between an amount of adsorbed nitrogen and an amount of desorbed nitrogen, and a pore size distribution was obtained to calculate an average pore size therefrom. A nitrogen adsorption device used during the observation was BELSORP-max manufactured by BEL Co., Ltd.

For example, by using a BET method, a specific surface area of pores was calculated in a relative nitrogen pressure (P/P0) range of 0 to 1.0 from a nitrogen adsorption-desorption isotherm obtained from the nitrogen adsorption experiment. Results thereof are shown in Table 2.

**[Table 2]**

| Classification | specific surface area (m2/g) | Pore volume (cm3/g) | Pore size (Å) |
|---|---|---|---|
| Preparation Example 1 | 1,120 | 0.9924 | 3.5598 |

Referring to Table 2, it can be confirmed that the MOF according to Preparation Example 1 has a mesoporous structure with a specific surface area of 1,000 m2/g or more.

### (Manufacturing of cathode and secondary battery)

### Example 1

### (Preparation of cathode)

A Li₂S-LiI-CNF composite was prepared as a cathode active material. Li₆PS₅Cl (D₅₀=3.0 µm, crystalline), which was an argyrodite-type crystal, was prepared as a solid electrolyte. PTFE was prepared as a binder. Such materials were mixed at a weight ratio of 60:40:1.2 of composite cathode active material:solid electrolyte:binder to prepare a cathode mixture. The cathode mixture was obtained through dry mixing using a thinky mixer.

The cathode mixture was disposed on one side of a cathode current collector consisting of aluminum foil, of which one side was coated with carbon, and was plate-pressed at a pressure of 200 MPa for 10 minutes to prepare a cathode. A thickness of the cathode was about 120 µm. A thickness of a cathode active material layer was about 100 µm, and a thickness of the carbon-coated aluminum foil was about 20 µm. An area of the cathode active material layer was equal to an area of the cathode current collector.

### (Preparation of anode)

SUS foil having a thickness of 10 µm was prepared as an anode current collector. As an anode active material, CB particles with a primary particle diameter of about 30 nm and silver (Ag) particles with an average particle diameter of about 60 nm were prepared.

4 g of a mixed powder obtained by mixing the CB particles and the silver (Ag) particles at a weight ratio of 3:1 was put into a container, and 4 g of an N-methyl-2-pyrrolidone (NMP) solution including 7 wt% of a PVDF binder (#9300 manufactured by Kureha Corporation) was added thereto to prepare a mixed solution. While NMP was gradually added to the prepared mixed solution, the mixed solution was stirred to prepare a slurry. The prepared slurry was applied onto a SUS sheet by using a bar coater, dried in air at a temperature 80 °C for 10 minutes, and then vacuum-dried at a temperature of 40 °C for 10 hours to prepare a stack. The prepared stack was cold roll-pressed to planarize a surface thereof, thereby preparing an anode having a first anode active material layer/anode current collector structure. A thickness of the first anode active material layer was about 15 µm. An area of the first anode active material layer was equal to an area of the anode current collector.

### (Preparation of solid electrolyte layer)

A mixture was prepared by adding 1.5 parts by weight of an acrylic binder with respect to 98.5 parts by weight of a solid electrolyte to a Li₆PS₅Cl solid electrolyte (D₅₀=3.0 µm, crystalline) which was an argyrodite-type crystal. Octyl acetate was added to the prepared mixture and stirred to prepare a slurry. The prepared slurry was applied onto a 15 µm-thick non-woven fabric placed on a 75 µm-thick PET substrate by using a bar coater and dried in air at a temperature 80 °C for 10 minutes to prepare a stack. The prepared stack was vacuum-dried at a temperature 80 °C for 2 hours to prepare a solid electrolyte layer.

### (Inactive member)

The Ti-MOF according to Preparation Example 1 was prepared as a MOF. After a slurry, which was obtained by mixing the MOF according to Preparation Example 1, a cellulose fiber, a glass fiber, aluminum hydroxide (Al(OH)₃), an acrylic binder, and a solvent, was formed into a gasket shape, the solvent was removed to prepare a flame-retardant inactive member.

A weight ratio of the MOF, the cellulose fiber, the glass fiber, the aluminum hydroxide (Al(OH)₃), and the acrylic binder was 5:20:8:70:2. A thickness of the inactive member was 120 µm.

Before the prepared flame-retardant inactive member was disposed on the solid electrolyte layer, vacuum heat treatment was performed at a temperature 80 °C for 5 hours to remove moisture or the like from the flame-retardant inactive member.

### (Manufacturing of lithium secondary battery)

The solid electrolyte layer was disposed on the anode such that the first anode active material layer was in contact with the solid electrolyte layer, and the cathode was disposed on the solid electrolyte layer. A gasket was disposed around the cathode to surround the cathode and be in contact with the solid electrolyte layer, thereby prepare a stack. A thickness of the gasket was about 120 µm. The above-described flame-retardant inactive member was used as the gasket. The gasket was disposed in contact with a side of the cathode and the solid electrolyte layer. The cathode was disposed at a central portion of the solid electrolyte layer, and the gasket was disposed to surround the cathode and extend to an end portion of the solid electrolyte layer. An area of the cathode was about 90 % of an area of the solid electrolyte layer, and the gasket was disposed in the remaining 10 % of the entire area of the solid electrolyte layer in which the cathode was not disposed.

The prepared stack was plate-pressed at a temperature of 85 °C and a pressure of 500 MPa for 30 minutes. Through such pressing, the solid electrolyte layer is sintered to improve battery characteristics. A thickness of the sintered solid electrolyte layer was about 45 µm. A density of a Li₆PS₅Cl solid electrolyte, which was an argyrodite-type crystal included in the sintered solid electrolyte layer, was 1.6 g/cc. An area of the solid electrolyte layer was equal to an area of the anode.

The pressed stack was put into a pouch and vacuum-sealed to manufacture a lithium secondary battery. Portions of the cathode current collector and the anode current collector were extended to the outside of the sealed battery and used as a cathode terminal and an anode terminal.

### Example 2

A lithium secondary battery was prepared in the same manner as in Example 1, except that the pressed stack was prepared, the MOF according to Preparation Example 1 was put into a pouch together with the pressed stack, and the pouch was vacuum-sealed to manufacture the lithium secondary battery.

### Example 3

A lithium secondary battery was manufactured in the same manner as in Example 1, except that, during preparation of a solid electrolyte, unlike Example 1, 90 parts by weight of a Li₆PS₅Cl solid electrolyte (D₅₀=3.0 µm, crystalline) which was an argyrodite-type crystal, 8.5 parts by weight of the Ti-MOF according to Preparation Example 1 as a MOF, and an acrylic binder were added to prepare a mixture, and then the solid electrolyte was prepared therefrom.

### Example 4

A lithium secondary battery was manufactured in the same manner as in Example 1, except that, unlike Example 1, a MOF was not added during preparation of an inactive member, a slurry was prepared by mixing a cellulose fiber, a glass fiber, aluminum hydroxide (Al(OH)₃), and an acrylic binder at a weight ratio of 20:8:70:2, the pressed stack was prepared, the MOF according to Manufacturing Example 1 was put into a pouch together with the pressed stack, and the pouch was vacuum-sealed to manufacture the lithium secondary battery.

### Comparative Example 1

A lithium secondary battery was manufactured in the same manner as in Example 1, except that, unlike Example 1, a MOF was not added during preparation of an inactive member, and a slurry was prepared by mixing a cellulose fiber, a glass fiber, aluminum hydroxide (Al(OH)₃), and an acrylic binder at a weight ratio of 20:8:70:2 to prepare the inactive member.

### Evaluation Example 3: Analysis of amount of generated hydrogen sulfide

While the lithium secondary batteries according to Examples 1 to 4 and Comparative Example 1 were charged and discharged, a maximum amount per hour of hydrogen sulfide generated from the lithium secondary batteries and an accumulated amount of hydrogen sulfide generated for 1 hour were measured. An analyzer used to measure the amount of the generated hydrogen sulfide and the accumulated amount of the hydrogen sulfide is a Breathview manufactured by AIOBIO Co., Ltd. Analysis results are shown in Table 3 below.

**[Table 3]**

| | Whether MOF is included | | | Maximum amount per hour of generated hydrogen sulfide | Accumulated amount per 1 hour of generated hydrogen sulfide |
|---|---|---|---|---|---|
| | Inactive member | Electrolyte | Empty space of pouch | | |
| Example 1 | Inclusion | Non-inclusion | Non-inclusion | 3.1 ppm | 4.01 µL |
| Example 2 | Non-inclusion | Non-inclusion | Inclusion | 3.2 ppm | 4.25 µL |
| Example 3 | Inclusion | Inclusion | Non-inclusion | 2.6ppm | 3.8 µL |
| Example 4 | Inclusion | Non-inclusion | Inclusion | 3.0ppm | 3.98 µL |
| Comparativ e Example 1 | Non-inclusion | Non-inclusion | Non-inclusion | 7.8 ppm | 9.01 µL |

As shown in Table 3, in the lithium secondary batteries according to Examples 1 to 4, an amount of generated hydrogen sulfide was reduced as compared to the lithium secondary battery of Comparative Example 1.

### List of Reference Numerals for Major Elements

| | | | |
|---|---|---|---|
| 1: | lithium secondary battery | 10: | cathode |
| 11: | cathode current collector | 12: | cathode active material layer |
| 20: | anode | 21: | anode current collector |
| 22: | first anode active material layer | 23: | thin film |
| 24: | second anode active material layer | 30: | electrolyte layer |
| 40: | inactive member | | |

## Claims

1. A lithium secondary battery comprising:
a cathode comprising lithium sulfide (Li₂S);
an anode;
an electrolyte layer disposed between the cathode and the anode; and
a metal-organic framework.

2. The lithium secondary battery of claim 1, comprising an inactive member disposed on one side of the cathode,
wherein the inactive member comprises the metal-organic framework.

3. The lithium secondary battery of claim 1, wherein the metal-organic framework has a size of 1 nm to 1 µm.

4. The lithium secondary battery of claim 1, wherein a size of the metal-organic framework has a uniform diameter distribution represented by Condition 1 below: $0.0 < σ 2 / μ < 1.0$ Condition 1 wherein, in Condition 1, σ2 denotes a variance of a plurality of primary particles measured by using dynamic laser scattering (DLS), and µ denotes an average particle diameter of the plurality of primary particles.

5. The cathode for a lithium secondary battery of claim 1, wherein the metal-organic framework is a porous crystalline compound comprising: a metal ion of Groups 2 to 15 or a metal ion cluster of Groups 2 to 15; and an organic ligand chemically bonded to the metal ion or the metal ion cluster.

6. The cathode for a lithium secondary battery of claim 5, wherein the metal ion of Groups 2 to 15 comprises at least one selected from cobalt (Co), nickel (Ni), molybdenum (Mo), tungsten (W), ruthenium (Ru), osmium (Os), cadmium (Cd), beryllium (Be), calcium (Ca), barium (Ba), strontium (Sr), iron (Fe), manganese (Mn), chromium (Cr), vanadium (V), aluminum (Al), titanium (Ti), zirconium (Zr) ), copper (Cu), zinc (Zn), magnesium (Mg), hafnium (Hf), niobium (Nb), tantalum (Ta), rhenium (Re), rhodium (Rh), iridium (Ir), palladium (Pd) ), platinum (Pt), silver (Ag), scandium (Sc), yttrium (Y), indium (In), thallium (Tl), silicon (Si), germanium (Ge), tin (Sn), lead (Pb), arsenic (As), antimony (Sb), and bismuth (Bi), and
the organic ligand is a group derived from at least one selected from compounds having at least one functional group selected from aromatic dicarboxylic acids, aromatic tricarboxylic acids, imidazole-based compounds, tetrazole-based compounds, 1,2,3-triazole, 1,2,4-triazole, pyrazole, aromatic sulfonic acids, aromatic phosphoric acids, aromatic sulfinic acids, aromatic phosphinic acids, bipyridine, amino groups, imino groups, amide groups, methanedithioic acid (-CS₂H) groups, methanedithioic acid anion (-CS₂-) groups, pyridine groups, and pyrazine groups.

7. The cathode for a lithium secondary battery of claim 1, wherein the metal-organic framework is represented by Formula 1 below:
Formula 1 MₘOₖXₗLₚ
wherein, in Formula 1,
M is at least one selected from the group consisting of Ti4+, Zr4+, Mn4+, Si4+, Al3+, Cr3+, V3+, Ga3+, Mn3+, Zn+3, Mn2+, Mg2+, Fe2+, Fe3+, and Cu+2,
m is an integer from 1 to 10,
k is 0 or an integer from 1 to 10,
l is 0 or an integer from 1 to 10,
p is an integer from 1 to 10,
X is OH-, Cl-, F-, I-, Br-, SO₄2-, NO₃-, ClO₄-, PF₆-, BF₃-, -(COO)ₙ-, R1-(S0₃)ₙ-, or
R¹-(PO₃)ₙ⁻,
R1 is at least one selected from hydrogen and a C1-C30 alkyl group,
n is an integer from 1 to 4,
L is a ligand comprising a radical R containing q carboxylate groups (*COO-#),
q is an integer from 1 to 6,
* denotes a position at which R is bonded to a carboxylate group, # denotes a position at which a metal ion M is bonded to a carboxylate group, and
R is selected from substituted or unsubstituted C1-C30 alkyl, substituted or unsubstituted C2-C30 alkenyl, substituted or unsubstituted C2-C30 alkynyl, substituted or unsubstituted mono C1-C30 aryl and polycyclic C1-C30 aryl, substituted or unsubstituted mono C1-C30 heteroaryl, and polycyclic C1-C30 heteroaryl.

8. The cathode for a lithium secondary battery of claim 1, wherein the metal-organic framework comprises a compound represented by Formula 2 below:
Formula 2 M'ₘOₖX'ₗL'ₚ
wherein, in Formula 2,
M' is at least one selected from Ti4+, Zr4+, V3+, Zn+3, Fe2+, Fe3+, and Cu+2,
L' is at least one selected from the group consisting of C₆H₄(CO₂-)₂ (terephthalate), C₂H₂(CO₂⁻)₂ (fumarate), C₄H₄(CO₂⁻)₂ (muconate), C₅H₃S(CO₂⁻)₂ (2,5-thiophenedicarboxylate), C₆H₂N₂(CO₂)₂ (2,5-pyrazine dicarboxylate), C₂H₄(CO₂⁻)₂ (succinate), C₃H₆(CO₂⁻)₂ (glutarate), C₄H₈(CO₂⁻)₂ adipate, C₁₀H₆(CO₂⁻)₂ (naphtalene-2,6-dicarboxylate), C₁₂H₈(CO₂⁻)₂ (biphenyl-4,4'-dicarboxylate), C₁₂H₈N₂(CO₂⁻)₂ (azobenzenedicarboxylate), C₆H₃(CO₂⁻)₃ (benzene-1,2,4-tricarboxylate), C₆H₃(CO₂⁻)₃ (benzene-1,3,5-tricarboxylate), C₂₄H₁₅(CO₂⁻)₃ (benzene-1,3,5-tribenzoate), C₆H₂(CO₂⁻)₄(benzene-1,2,4,5-tetracarboxylate, C₁₀H₄(CO₂⁻)₄ (naphtalene-2,3,6,7-tetracarboxylate), C₁₀H₄(CO₂⁻)₄ (naphtalene-1,4,5,8-tetracarboxylate), and C₁₂H₆(CO₂-)₄ \(biphenyl-3,5,3',5'-tetracarboxylate),
X' is at least one selected from OH-, Cl-, F-, CH₃COO-, PF₆-, and ClO₄-,
m is an integer from 1 to 8,
k is 0 or an integer from 1 to 8,
l is 0 or an integer from 1 to 8, and
p is an integer from 1 to 8.

9. The lithium secondary battery of claim 1, wherein the metal-organic framework comprises at least one selected from the group consisting of Ti₈O₈(OH)₄[O₂C-C₆H₄-CO₂]_{6,} Ti₈O₈(OH)₄[O₂C-C₆H₃(NH₂)-CO₂]₆, VO[C₆H₄(CO₂)₂], Al(OH)[C₆H₄(CO₂)₂], Cr(OH)[C₆H₄(CO₂)₂], Al(OH)[C₁₀H₆(CO₂)₂], Al₁O(OH)₁₈(H₂O)₃[C₆H₃-(CO₂)₃]₆.nH₂O, Cr₃OXₗ[C₆H₄(CO₂)₂]₃ (X is at least one selected from H, OH⁻, Cl⁻, F⁻, CH₃COO-, PF₆- and ClO₄- and l is 0 or an integer from 1 to 8), Cr₃OXₗ[C₁₂H₈(CO₂)₂]₃ (X is at least one selected from H, OH⁻, Cl⁻, F⁻, CH₃COO-, PF₆-, and ClO₄- and l is 0 or an integer from 1 to 8), Cr₃OXₗ[C₆H₃(CO₂)₃]₃ (X is at least one selected from H, OH⁻, Cl⁻, F⁻, CH₃COO-, PF₆-, and ClO₄- and l is 0 or an integer from 1 to 8), Al₈(OH)₁₅(H₂O)₃[C₆H₃(CO₂)₃]₃, V₃OXₗ[C₆H₃(CO₂)₃]₃ (X is at least one selected from H, OH-, Cl-, F-, CH₃COO-, PF₆- and ClO₄- and l is 0 or an integer from 1 to 8), ZrO[C₆H₄(CO₂)₂], and Ti₈O₈(OH)₄[O₂C-C₆H₃(NH₂)-CO₂]_{6.}

10. The cathode for a lithium secondary battery of claim 1, wherein a pore size of the metal-organic framework is 5 nm or less.

11. The cathode for a lithium secondary battery of claim 1, wherein the cathode comprises a cathode current collector and a cathode active material layer disposed on the cathode current collector, and
the cathode active material layer comprises lithium sulfide (Li₂S) and an ion-conductive lithium salt.

12. The cathode for a lithium secondary battery of claim 11, wherein the ion-conductive lithium salt is a binary compound or a ternary compound,
the binary compound comprises LiI, LiBr, LiCl, LiF, LiH, Li₂O, Li₂Se, Li₂Te, Li₃N, Li₃P, Li₃As, Li₃Sb, Li₃Al₂, LiB₃, or a combination thereof, and
the ternary compound comprises Li₃OCl, LiPF₆, LiBF₄, LiSbF₆, LiAsF₆, LiClO₄, LiAlO₂, LiAlCl₄, LiNO₃, Li₂CO₃, LiBH₄, Li₂SO₄, Li₃BO₃, Li₃PO₄, Li₄NCl, Li₅NCl₂, Li₃BN₂, or a combination thereof.

13. The cathode for a lithium secondary battery of claim 11, wherein the cathode active material layer further comprises a carbon-based material,
the carbon-based material comprises a carbon nanostructure, and
the carbon nanostructure comprises carbon nanofibers, carbon nanotubes, carbon nanobelts, carbon nanorods, or a combination thereof.

14. The cathode for a lithium secondary battery of claim 11, wherein the cathode active material layer further comprises a solid electrolyte.

15. The cathode for a lithium secondary battery of 14, wherein the solid electrolyte is a sulfide-based solid electrolyte, and
the sulfide-based solid electrolyte comprises at least one selected from Li₂S-P₂S₅, Li₂S-P₂S₅-LiX (X is a halogen element), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m and n are each a positive number and Z is one of Ge, Zn, and Ga), Li₂S-GeS₂, Li₂S-SiS₂-Li₃PO₄, Li₂S-SiS₂-LiₚMO_{q} (p and q are each a positive number and M is one of P, Si, Ge, B, Al, Ga, and In), Li₇₋ₓPS₆₋ₓClₓ (0≤x≤2), Li₇₋ₓPS₆₋ₓBrₓ (0≤x≤2), and Li₇₋ₓPS₆₋ₓIₓ (0≤x≤2).

16. The cathode for a lithium secondary battery of claim 15, wherein the sulfide-based solid electrolyte comprises an argyrodite-type solid electrolyte, and the argyrodite-type solid electrolyte comprises at least one selected from Li₆PS₅Cl, Li₆PS₅Br, and Li₆PS₅I, and has a density of 1.5 g/cc to 2.0 g/cc.

17. The cathode for a lithium secondary battery of claim 11, wherein the cathode current collector comprises a base film and a metal layer disposed on one side or both sides of the base film,
the base film comprises a polymer, wherein the polymer comprises polyethylene terephthalate (PET), polyethylene (PE), polypropylene (PP), polybutylene terephthalate (PBT), polyimide (PI), or a combination thereof, and
the metal layer comprises indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

18. The lithium secondary battery of claim 1, wherein the electrolyte layer comprises a solid electrolyte, a gel electrolyte, or a combination thereof.

19. The lithium secondary battery of claim 18, wherein the electrolyte layer comprises a metal-organic framework.

20. The lithium secondary battery of claim 1, wherein the anode comprises a lithiophilic material.
